(19) Europäisches Patentamt
European Patent Office
Office européen des brevets

(11) Veröffentlichungsnummer: **0 003 571**
**B1**

(12) # EUROPÄISCHE PATENTSCHRIFT

(45) Veröffentlichungstag der Patentschrift: **20.01.82**

(21) Anmeldenummer: **79100303.1**

(22) Anmeldetag: **02.02.79**

(51) Int. Cl.$^3$: **C 08 G 73/00,**
C 08 G 73/06, C 08 G 61/04

(54) **Feste modifizierte Azulminsäuren mit intaktem Molekülgitter, Verfahren zu ihrer Herstellung und ihre Verwendung.**

(30) Priorität: **14.02.78 DE 2806020**

(43) Veröffentlichungstag der Anmeldung:
**22.08.79 Patentblatt 79/17**

(45) Bekanntmachung des Hinweises auf die Patenterteilung:
**20.01.82 Patentblatt 82/3**

(84) Benannte Vertragsstaaten:
**BE CH DE FR GB IT NL SE**

(56) Entgegenhaltungen:
**GB - A - 845 363**

(73) Patentinhaber: **BAYER AG**
**Zentralbereich Patente, Marken und Lizenzen**
**D-5090 Leverkusen 1, Bayerwerk (DE)**

(72) Erfinder: **Wagner, Kuno, Dr.**
**Am Kiesberg 8**
**D-5090 Leverkusen 1 (DE)**
Erfinder: **Findeisen, Kurt, Dr.**
**In der Follmuehle 10**
**D-5068 Odenthal 2 (DE)**

**EP 0 003 571 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

# Feste modifizierte Azulminsäuren mit intaktem Molekülgitter, Verfahren zur ihrer Herstellung und ihre Verwendung

Die vorliegende Erfindung betrifft neue, fest modifizierte Azulminsäuren mit intaktem Molekülgitter, mehrere Verfahren zu ihrer Herstellung sowie ihre Verwendung als Zwischenprodukte zur Synthese zahlreicher Produkte.

## Stand der Technik

Polymere Blausäuren, sogenannte Azulminsäuren, sowie mehrere Verfahren zu deren Herstellung sind bereits beschrieben worden (vgl. Houben-Weyl, Band 8 (1952), Seite 261; DT—PS 662 338 und DT—PS 949 060). So erhält man polymere Blausäure z.B. dadurch, daß man monomere Blausäure in verdünnter wäßriger Lösung in Gegenwart von basischen Katalysatoren, wie Ammoniak, Natriumcyanid, Natriumcanat, Kaliumcyanat oder Erdalkalien, auf die Reaktionstemperatur erhitzt und nach dem Eintreten der Umsetzung durch Kühlung dafür sorgt, daß eine Reaktionstemperatur von 120°C nicht überschritten wird (vgl. DT—PS 662 338). In einer besonderen Variante dieses Verfahrens wird dem Gemisch aus Lösungsmittel-, Blausäure-Katalysator, in dem die Umsetzung bereits begonnen hat, weitere Blausäure zugeführt (vgl. DT—PS 949 060). Bei diesen bekannten Blausäurepolymerisaten handelt es sich um braunschwarze bis schwarze pulvrige Produkte, die in allen inerten Solventien unlöslich sind, sich aber in 1 n wäßriger Natronlauge bereits in der Kälte unter Zersetzung lösen. Ein schwerwiegender Nachteil derartiger Blausäurepolymerisate besteht darin, daß sie sowohl bei der trockenen als auch bei der feuchten Lagerung schon bei Raumtemperatur fortlaufend kleine Mengen an Cyanwasserstoff abspalten. Mit steigender Temperatur nimmt auch die Rate der Cyanwasserstoffabspaltung zu. Selbst in noch so schonend gelagerten, Azulminsäuren enthaltenden Gebinden treten daher Blausäuremengen auf, die weit über dem gesetzlich festgesetzten Blausäure-MAK-Wert von 11 ppm liegen. Daher ist eine praktische Verwendung der bekannten Blausäurepolymerisate für die verschiedensten Zwecke außerordentlich umweltgefährdend und somit kaum möglich.

Nach einem Vorschlag von Th. Völker kommt der braun-schwarzen, in Wasser hergestellten polymeren Blausäure (Azulminsäure) im wesentlichen die folgende Formel zu (vgl. Angew. Chem. *72* (1960) Seiten 379—384):

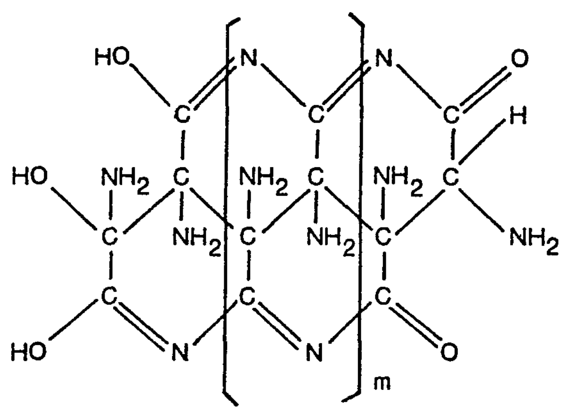

(I)

Aus den Sauerstoffgehalten der bekannten Azulminsäuren wurde ein Polymerisationsgrad (HCN) von X = 15 – 24 berechnet, so daß sich für m (Formel I) Werte von 1 bis 4 ergeben. Die maximal erzielten Molekulargewichte der Polymere liegen wenig oberhalb von 700.

Aus der GB—A 845 363 geht hervor, daß sich polymere Blausäure (Azulminsäure) durch Behandlung mit Wasser in Gegenwart von Säure- oder Alkali hydrolysieren läßt, so daß wäßrige Dispersionen oder gar Lösungen entstehen. Als Ausgangsstoffe dienen dabei Azulminsäuren, die durch Polymerisation von flüssiger Blausäure, die völlig frei oder zumindest nahezu frei von Wasser ist, erhalten werden (vgl. Seite 1, Zeilen 67—72, sowie Seite 3, Zeilen 25/26 und 73/74). Diese wasserfrei hergestellten Azulminsäuren besitzen eine andere Struktur als diejenigen, die durch Kondensation von Blausäure in Gegenwart von Wasser zubereitet werden, wobei die genaue Konstitution der erstgenannten Stoffe nicht bekannt ist.

## Erfindungsdarlegung

Gegenstand dieser Erfindung sind aus bekannten, in Gegenwart von Wasser hergestellten Azulminsäuren durch topochemische Reaktion erhältliche fest modifizierte Azulminsäuren mit intaktem Molekülgitter mit einem Gehalt von 0,5 bis 55 Gewichtsprozent an ionischen Gruppen der Formel

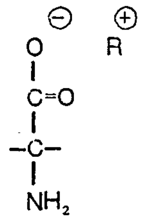

(F₁)

in welcher

R für Wasserstoff, Ammonium, ein Äquivalent einer protonisierten oder quaternisierten organischen Stickstoffbase, eines Sulfonium-Kations oder für ein Äquivalent eines Metallkations steht,

und mit einem Gehalt von 0,5 bis 15 Gewichtsprozent an durch Decarboxylierungsreaktionen entstandenen Gruppen der Formel

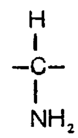

($F_2$)

sowie Säureadditions-Salze und Komplex-Verbindungen dieser modifizierten Azulminsäuren und außerdem Mischprodukte dieser modifizierten Azulminsäuren mit Zusatzstoffen.

Gegenstand der vorliegenden Erfindung sind ferner Verfahren zur Herstellung der vorgenannten Produkte, wobei die Verfahren darin bestehen, daß man

1) nahezu fehlerstellenfreie bekannte, in wäßrigem Medium hergestellte Azulminsäure mit topochemischer Reaktion in wäßrigem Medium

a) gegebenenfalls in Anwesenheit von Zusatzstoffen bei Temperaturen zwischen 20 und 120°C mit katalytischen Mengen an organischen oder anorganischen Säuren behandelt, oder

b) gegebenenfalls in Anwesenheit von Zusatzstoffen bei Temperaturen zwischen 20 und 150°C mit katalytischen Mengen an Basen oder basischen Salzen behandelt, oder

c) bei Temperaturen zwischen 80 und 120°C mit Wasser im Neutralbereich behandelt, oder

d) bei Temperaturen zwischen 80 und 120°C mit katalytischen oder auch mit größeren Mengen an pflanzlichen Aschen, katalytisch wirksamen Naturstoffen und/oder an Düngemitteln behandelt, oder

e) gegebenenfalls in Anwesenheit katalytischer Mengen von Oxidationsmitteln sowie gegebenenfalls in Anwesenheit von katalytischen Mengen an organischen Säuren bei Temperaturen zwischen 20 und 120°C mit katalytischen Mengen an Metallsalzen behandelt, oder

f) bei Temperaturen zwischen 20 und 120°C mit 0,5 bis 1 Mol an Metallsalz-Komplexen stabilisierter Azulminsäuren pro Mol an eingesetzter Azulminsäure behandelt, oder

g) bei Temperaturen zwischen 20 und 120°C mit katalytischen Mengen an Oxidationsmitteln behandelt, oder daß man

2) wäßrige Blausäure-Lösungen mit einem Blausäuregehalt von 15 bis 25% in Gegenwart von 1 bis 15%, — bezogen auf eingesetzte monomere Blausäure —, an basischen Katalysatoren unter hydrolysierenden Bedingungen in wäßrigem Medium, gegebenenfalls in Gegenwart von Zusatzstoffen zunächst 1 bis 4 Stunden bei Temperaturen zwischen 40 und 60°C und dann weitere 4 bis 10 Stunden bei Temperaturen zwischen 80 und 90°C polymerisiert, oder daß man

3) gemäß 1 oder 2 hergestellte modifizierte Azulminsäuren in wäßrigem medium bei Temperaturen zwischen 20 und 120°C mit katalytischen Mengen an organischen oder anorganischen Säuren behandelt,

und die so hergestellten Produkte gegebenenfalls anschließend mit Säure oder Base behandelt.

Gegenstand der Erfindung ist ferner die Verwendung erfindungsgemäßer Produkte

— als Zwischenprodukte zur Herstellung von stabilisierten Azulminsäuren, worunter Azulminsäuren mit hoher Beständigkeit gegen Blausäureabspaltung zu verstehen sind,

— als reaktive Füllstoffe und Katalysatoren in der Isocyanat-Chemie, z.B. zur Herstellung von Polyurethan-Kunststoffen,

— als Flammschutzmittel, Alterungsschutzmittel und als Füllmaterialien für Kunststoffe, wie z.B. Polyurethan-Kunststoffe, Vinylpolymerisate, Polyamidkunststoffe, Kautschuke und Epoxidharze, und

— als Ausgangsstoffe zur Herstellung von Agrarchemikalien.

Erläuterungen

Unter modifizierten Azulminsäuren sind im vorliegenden Fall solche Blausäurepolymerisate zu verstehen, die ionische Gruppen der Formeln

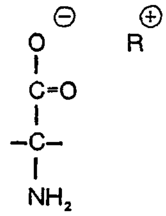

und

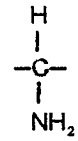

enthalten. Derartige Gruppen haben ihren Ursprung in Nitrilgruppen, die in der Azulminsäure vorhanden sind und als Haltepunkte der cyclisierenden Nitrilpolymerisation aufgefaßt werden können.

In idealisierter Darstellung kann der Übergang von einer Nitrilgruppe der Azulminsäure in eine entsprechende Carboxylgruppe formelmäßig wie folgt veranschaulicht werden:

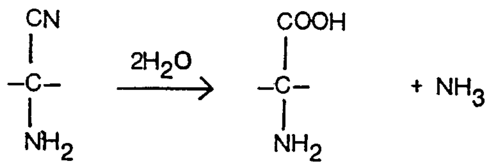


bzw.

(II)

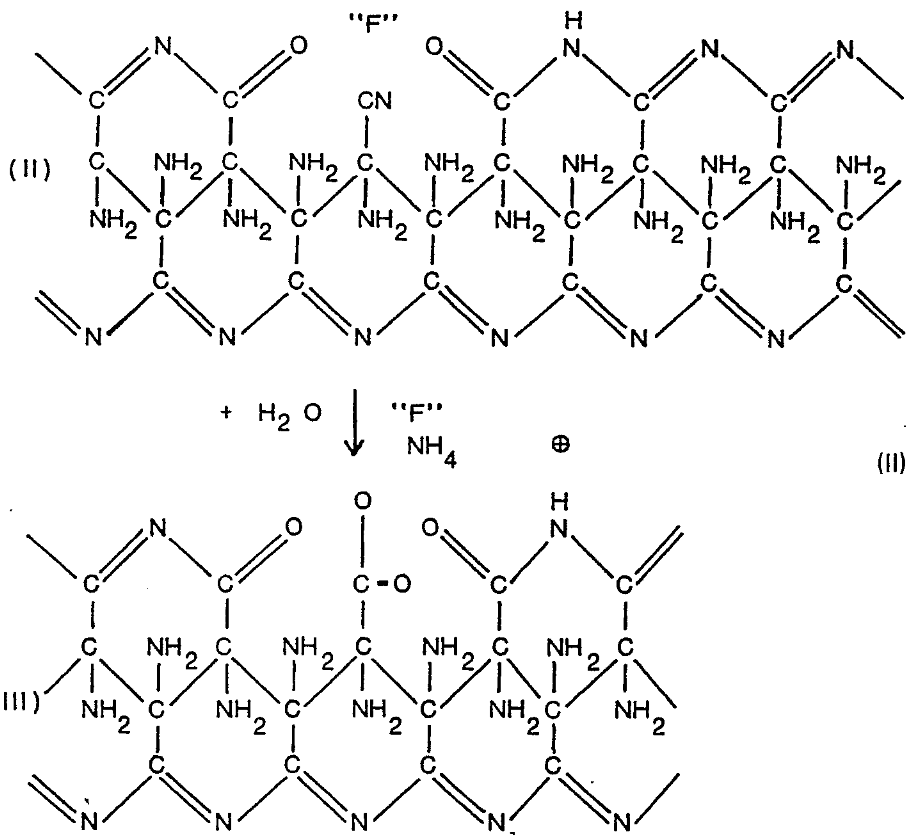


(III)

(II)

Selbstverständlich ist auch die Bildung von Amid- oder Imidgruppen aus Nitrilgruppen gegeben. So läßt sich z.B. die Bildung von Amidgruppen durch das nachstehende Formelschema wiedergeben.

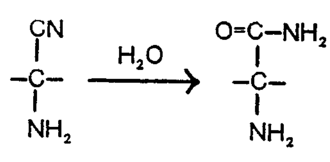


Die erfindungsgemäße Erzeugung ionischer oder nicht-ionischer Gruppen der obigen Formeln erfolgt nicht nur an Nitrilgruppen, die in dem eingesetzten Polymerisat bereits vorhanden sind, sondern

auch an solchen Nitrilgruppen, die durch katalytische Entcyclisierungen entstehen. Darüber hinaus sind verschiedene andere Hydrolyse-Reaktionen für die Bildung von Fehlerstellen verantwortlich. Z.B. kann eine

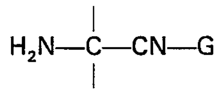-Gruppe,

die im Molekularverband der Azulminsäure als $\alpha$-Aminonitril aufzufassen ist, durch Cyanwasserstoff-Abspaltung und anschließende topochemische Hydrolysereaktion gemäß nachstehendem Formelschema in eine Carbonylgruppe überführt werden:

a)

b)

c)

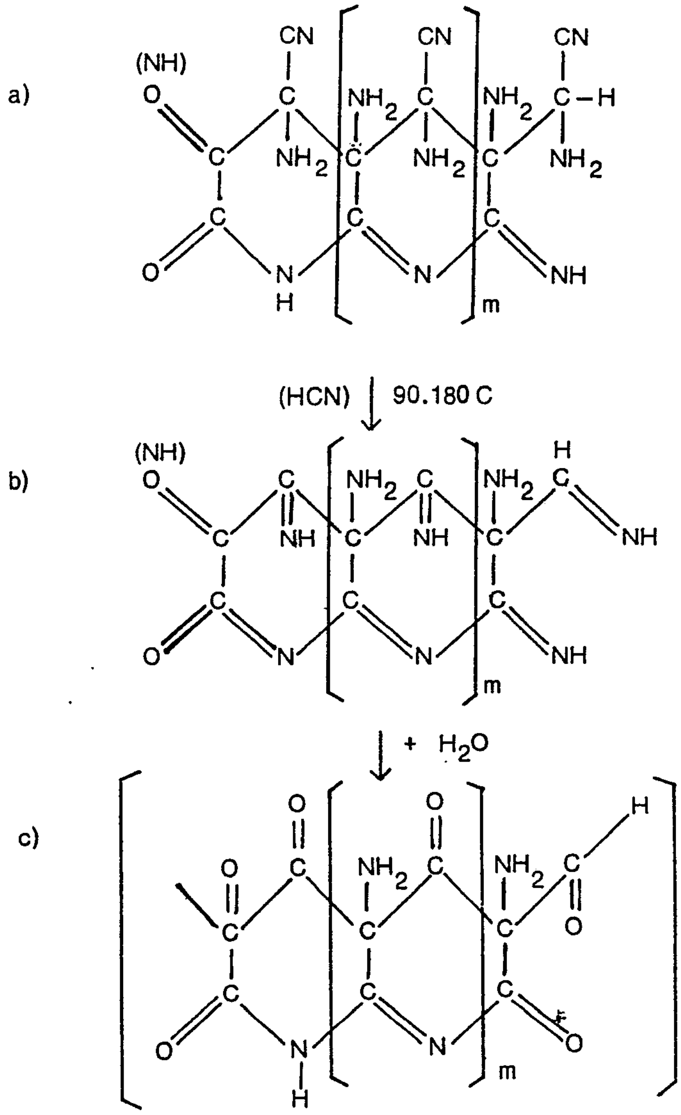


Im folgenden werden die ionischen Gruppen der Formel

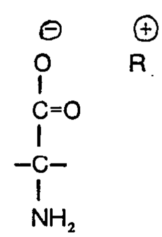

als *$F_1$-Fehlerstellen* und die Gruppen der Formel

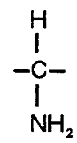

als *$F_2$-Fehlerstellen* bezeichnet.

Die $F_2$-Fehlerstellen entstehen aus den $F_1$-Fehlerstellen, in denen R für Wasserstoff oder ein anderes geeignetes Ion steht, gemäß nachstehendem Formelschema:

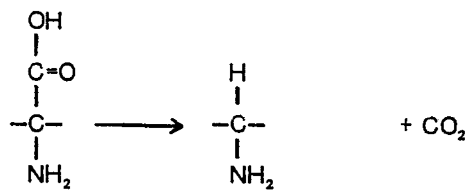

bzw. im Molekularverband der Azulminsäure:

Fehlerstellen durch Decarboxylierungsreaktion

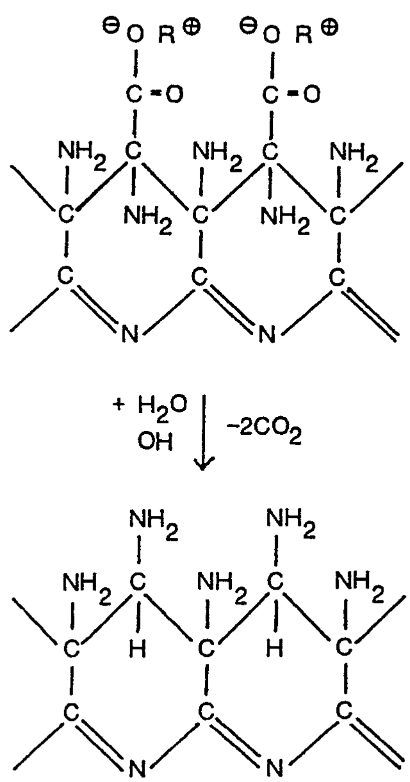


Erhöhung der $NH_2$-Gruppen-Konzentration, Aciditätsverlust, Basizitätsanstieg.

Wie aus der oben angegebenen Formel (II) zu ersehen ist, steht jede erzeugte $F_1$-Fehlerstelle in unmittelbarer Nachbarschaft zu einer $\alpha$-ständigen und zu einer $\beta$-ständigen Aminogruppe. Somit bilden sich an den $F_1$-Fehlerstellen der Konstitution

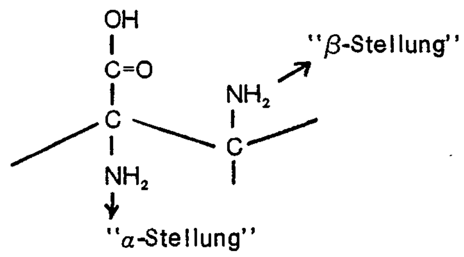


entweder intramolekulare zwitterionische Salze der Konstitution

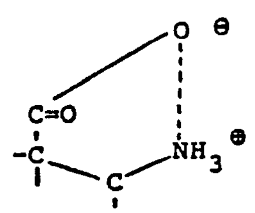

(=5 gliedrige Ringe)

oder intermolekular vernetzte Salze zwischen mehreren Azulminsäuremolekülen der folgenden idealisierten Darstellung:

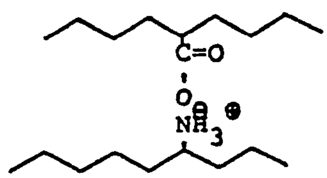

Die Bildung intramolekularer Salze, d.h. 5-gliedriger Ringe, ist bevorzugt.

Da die Entstehung der $F_1$-Fehlerstellen mit der Freisetzung von Ammoniak und die Entstehung der $F_2$-Fehlerstellen mit der Freisetzung von Kohlendioxid gekoppelt ist, stellt die entburdene Menge an Ammoniak und Kohlendioxid ein quantitatives Maß für die Menge der erzeugten Fehlerstellen dar. Der Quotient aus der entbundenen Molmenge an Ammoniak und der entbundenen Molmenge an Kohlendioxid gibt Aufschluß über das Verhältnis von $F_1$- zu $F_2$-Fehlerstellen.

Der Fehlerstellengehalt der erfindungsgemäßen modifizierten Azulminsäuren in Gewichtspozent wird im folgenden jeweils in der Weise bestimmt, daß man das Äquivalentgewicht der betreffenden Fehlerstelle (= ionische oder nicht-ionische Gruppierung $F_1$ oder $F_2$) in Relation setzt zu der entsprechenden nicht in eine ionische oder nicht-ionische Gruppierung überführten Gewichtsgröße (100 g). So errechnet sich beispielsweise die Fehlerstellenkonzentration für eine $F_1$-Fehlerstelle, in der R für Wasserstoff steht, aus der jeweils entstandenen molaren Menge an Ammoniak und der Tatsache, daß die zugehörige ionische Gruppierung der Formel

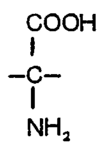

ein Äquivalentgewicht von 73 aufweist.

In analoger Weise errechnet sich der $F_2$-Fehlerstellengehalt aus der jeweils entbundenen molaren Menge an Kohlendioxid und der Tatsache, daß die betreffende Gruppierung der Formel

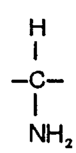

ein Äquivalentgewicht von 29 aufweist.

Erfindungshöhe und technischer Fortschritt

Es ist als äußerst überraschend anzusehen, daß die erfindungsgemäßen Produkte aus bekannten, in Gegenwart von Wasser hergestellten Azulminsäuren in topochemischer Reaktion zugänglich sind, obwohl die als Ausgangsstoffe eingesetzten Polymeren völlig unlöslich sind und wegen der geringen Porosität nur eine relative kleine Oberfläche aufweisen. Im Gegensatz zu den vorbekannten Blausäurepolymerisaten lösen sich die erfindungsgemäßen modifizierten Azulminsäuren sehr leicht in 0,5 bis 1 normaler wäßriger Natronlauge oder Kalilauge. Überraschend ist ferner, daß die *gezielte Einführung* von Fehlerstellen möglich ist.

Die bei der Hestellung der erfindungsgemäßen Produkte als Ausgangsstoffe fungierenden, durch Polymerisation von wäßriger Blausäure synthetisierten Azulminsäuren unterscheiden sich konstitutionell von denjenigen, die wasserfrei hergestellt werden und bei dem Verfahren eingesetzt werden, das in der GB—A 845 363 beschrieben wird. Ohne die genaue formelmäßige Zusammensetzung der zur Diskussion stehenden Produkte zu kennen, sei darauf hingewiesen, daß es sich bei den in Gegenwart von Wasser zubereiteten Azulminsäuren um bicyclische Stoffe handelt (vergleiche Formel (1) auf Seite 2 des Anmeldungstextes), während die wasserfrei hergestellten Azulminsäuren eine andere Struktur besitzen.

Weiterhin unterscheiden sich die erfindungsgemäßen Produkte von denjenigen, die in der GB—A 845 363 offenbart werden, auch bezüglich der Art, in der die (partielle) Hydrolyse durchgeführt wird. So wird die Behandlung der Azulminsäure gemäß GB—A 845 363 so vorgenommen, daß wenigstens 2 Gramm-Mol Wasser und 1 Gramm-Mol Base pro Nitrilgruppe in 1 Gramm-Mol an Polymerem (vergleiche GB—A 845 363, Seite 2, Zeilen 107—112) verwendet werden. Unter derartig drastischen Bedingungen wird das Molekülgitter (die Matrix) der Azulminsäure vollständig zerstört, was zur Folge hat, daß die entstehenden Produkte wäßrige Dispersionen oder Lösungen sind. Im Falle der erfindungsgemäßen Produkte werden zur Hydrolyse jedoch nur katalytische Mengen an stark basischen bzw. stark sauren Reagenzien verwendet und die Matrix bleibt im wesentlichen unverändert. Die resultierenden Produkte sind in Wasser kaum lösliche Feststoffe.

Im Gegensatz zu dem in der GB—A 845 363 beschriebenen Verfahren handelt es sich bei den erfindungsgemäßen Umsetzungen um topochemische Reaktionen, also um Reaktionen, die nur an der Oberfläche der Matrix ablaufen und an denen die Oberfläche der Matrix entscheidend beteiligt ist. Mit Hilfe dieser Umsetzungen ist es möglich, gezielt Fehlerstellen in Azulminsäuren einzuführen, wobei die Reaktion jederzeit (zum Beispiel durch Abfiltrieren des Feststoffes) unterbrochen werden kann. Die Menge der gebildeten Fehlerstellen läßt sich dabei auf der Grundlage des freigesetzten Ammoniaks und Kohlendioxids in einfacher Weise bestimmen.

Die erfindungsgemäßen Stoffe weisen eine wesentlich höhere Quellbarkeit auf als die vorbekannten Azulminsäuren. Sie besitzen reaktive Gruppen und lassen sich vielseitig verwenden. Insbesondere eignen sie sich als Ausgangsprodukte zur Herstellung von stabilisierten Azulminsäuren, worunter im vorliegenden Fall Kondensationsprodukte aus Fehlerstellen enthaltenden Azulminsäuren mit Aldehyden bzw. Ketonen zu verstehen sind. Die erfindungsgemäßen Stoffe stellen somit eine wertvolle Bereicherung der Technik dar.

Genaue Definition der erfindungsgemäßen Produkte

Die in den erfindungsgemäßen modifizierten Azulminsäuren enthaltenden Fehlerstellen sind durch die Formeln ($F_1$) und ($F_2$) definiert. In der Formel ($F_1$) steht R vorzugsweise für Wasserstoff, Ammonium oder ein Äquivalent eines Kations von einem Metall aus der I. bis V. Hauptgruppe bzw. aus der I. bis VIII. Nebengruppe, wobei die Kationen von Lithium, Natrium, Kalium, Beryllium, Magnesium, Calcium, Strontium, Barium, Aluminium, Thallium, Zinn, Blei, Wismut, Kupfer, Silber, Gold, Zink, Cadmium, Quecksilber, Titan, Zirkon, Chrom, Mangan, Eisen, Cobalt, Nickel, Platin und Palladium, Rhodium und Ruthenium beispielhaft genannt seien.

R steht ferner vorzugsweise für ein Aquivalent eines protonisierten Alkylamins mit 1 bis 6 Kohlenstoffatomen, eines protonisierten Dialkylamins mit 1 bis 6 Kohlenstoffatomen pro Alkylgruppe, eines protonisierten Trialkylamins mit 1 bis 6 Kohlenstoffatomen pro Alkylgruppe, eines protonisierten Hydroxyalkylamins mit 1 bis 6 Kohlenstoffatomen, eines protonisierten Di-(hydroxy-alkyl)-amins mit 1 bis 6 Kohlenstoffatomen pro Hydroxyalkylgruppe, eines protonisierten Tri-(hydroxyalkyl)-amins mit 1 bis 6 Kohlenstoffatomen pro Hydroxyalkylgruppe, eines protonisierten Cycloalkylamins mit 3 bis 8 Kohlenstoffatomen, eines protonisierten Alkylendiamins mit 2 bis 6 Kohlenstoffatomen, eines protonisierten Guanidins, Melamins oder Dicyandiamids oder einer protonisierten, gesättigten oder ungesättigten heterocyclischen Stickstoffbase mit 5 bis 7 Ringgliedern und 1 bis 3 Stickstoffatomen im heterocyclischen Ring, sowie für diejenigen Kationen, die durch Quarternisierung, wie z.B. Permethylierung, der vorgenannten basischen Stickstoff-Verbindungen entstehen. Besonders bevorzugte Stickstoffbasen sind in diesem Zusammenhang Methylamin, Dimethylamin, Trimethylamin, Äthylamin, Diäthylamin, Triäthylamin, tert.-Butylamin, Äthanolamin, Diäthanolamin, Triäthanolamin, Cyclopropylamin, Cyclopentylamin, Cyclohexylamin, Äthylendiamin, Pyrrolidin, Piperidin, Morpholin, Imidazol, Pyrazol, 1,2,4-Triazol, 1,2,3-Triazol, 2-Äthylimidazol und Aminotriazol. Weiterhin steht R vorzugsweise für Trialkylsulfonium-Kationen, insbesondere für das Triäthylsulfonium-Kation.

Unter erfindungsgemäßen Azulminsäure-Säure-Additions-Salzen sind solche Salze zu verstehen,

die sich durch Addition eines Protons einer anorganischen oder organischen Säure an eine Aminogruppe oder eine andere geeignete Gruppe in einer erfindungsgemäßen modifizierten Azulminsäure bilden. Als anorganische Säuren kommen hierbei vorzugsweise in Frage Halogenwasserstoffsäuren, wie Fluorwasserstoffsäure, Chlorwasserstoffsäure und Bromwasserstoffsäure, weiterhin Säuren des Phosphors, wie Phosphorsäure, phosphorige Säure, Dialkylphosphorsäure, z.B. Dibutylphosphorsäure, Polyphosphorsäure mit Molekulargewichten von 6000 bis 40 000 und Phospholinoxid-phosphonsäuren, z.B. solchen der Formeln

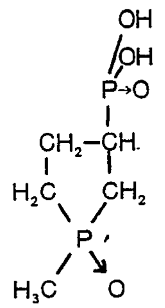

und

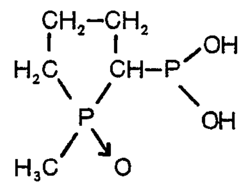

ferner Salpetersäure und vom Schwefel abgeleitete Säuren, wie Schwefelsäure und Sulfonsäuren, wobei Äthylsulfonsäure, p-Toluolsulfonsäure und Naphthalin-1,5-disulfonsäure beispielhaft genannt seien. Als organische Säuren kommen vorzugsweise in Betracht gesättigte oder ungesättigte Carbonsäuren, wie Ameisensäure, Essigsäure, Propionsäure, 2-Äthyl-capronsäure, Acrylsäure, Methacrylsäure, Ölsäure und Ricinolsäure, weiterhin Halogencarbonsäuren, wie Chloressigsäure, Dichloressigsäure und Trichloressigsäure, ferner Dicarbonsäuren, wie Maleinsäure, Fumarsäure und Bernsteinsäure und davon abgeleitete Halbester, und außerdem Hydroxycarbonsäuren, wie Hydroxyessigsäure, Weinsäure, Zitronensäure und Salicylsäure.

Unter erfindungsgemäßen Azulminsäure-Komplex-Verbindungen sind vorzugsweise Komplexe aus erfindungsgemäßen modifizierten Azulminsäuren und Metallverbindungen oder Ammoniumsalzen zu verstehen. Als Metallverbindungen kommen hierbei inbesondere Salze, Säuren, Hydroxide bzw. Oxide von Metallen der II. bis V. Hauptgruppe bzw. der I. bis VIII. Nebengruppe in Betracht. Beispielhaft genannt seien Calcium-chlorid, -acetat, -nitrat und -hydroxid, bzw. -oxid, Strontiumnitrat, Bariumchlorid und -acetat, Borate, Aluminium-acetat und -formiat, Thalliumsulfat, Thalliumnitrat, Siliziumtetrachlorid, Natrium bzw. Kaliumsilikat, Zinn-II-chlorid, Blei-II-chlorid, -II-acetat und -II-hydroxid, Wismut-III-hydroxid und Wismut-III-nitrat, Kupfer-sulfat, -nitrat und -acetat, Silbernitrat, Tetrachlorogoldsäure, Zink-chlorid und -acetat, Cadmiumchlorid, Quecksilber-II-chlorid, Titantetrachlorid und -tetrabutylat, Zirkonsulfat, Vanadate, Chrom-III-chlorid, Molybdate, Wolframate und deren Heteropolysäuren, Mangan-II-sulfat und -II-acetat, Eisen-II-sulfat, -II-acetat und -III-chlorid, Cobaltchlorid, Nickelchlorid, Hexachloroplatinsäure und Palladium-II-chlorid. — Als Ammoniumsalze kommen insbesondere Ammoniumnitrat und Ammoniumacetat in Frage.

Als Zusatzstoffe können in den erfindungsgemäßen Produkten organische Naturstoffe und daraus gewonnene Produkte, anorganische Naturstoffe und daraus gewonnene Produkte, synthetische organische Produkte, synthetische anorganische Produkte und/oder Mischprodukte aus organischen und anorganischen Produkten enthalten sein.

Vorzugsweise in Frage kommende organische Naturstoffe und daraus gewonnene Produkte sind hierbei Holzpulver, Ligninpulver, Ligninsulfonsäuren, ammonifizierte Ligninsulfonsäuren, Humus, Huminsäuren, ammonifizierte Huminsäuren, Torf, Proteine und der Abbauprodukte, z.B. Hydrolyseprodukte von Hefen, Algenmaterial (Alginate), Polypeptiden, wie Wolle und Gelatine, Fischmehl und Knochenmehl, ferner Aminosäuren, Oligopolypeptide, Pektine, Monosaccharide, wie Glucose und Fructose, Disaccharide, wie Saccharose, Oligosaccharide, Polysaccharide, wie Stärke und Cellulose, weiterhin Hemicellulosen, homogenisierte Materialien pflanzlichen und tierischen Ursprungs, Aktivkohlen sowie Aschen, die durch Partialoxidation, vollständige Oxidation oder Verbrennung organischer, durch Photosynthese gebildeter Stoffe oder üblicher Brennstoffe erhältlich sind, wobei Tannenasche, Ginsterasche, Asche von serbischen Fichten, Eichenasche, Birkenasche, Buchenasche, Weidenasche und Tabakblätter-Asche speziell genannt seien.

Als anorganische Naturstoffe und daraus gewonnene Produkte kommen vorzugsweise in Betracht Silikate, wie Aluminiumsilikate, Calciumsilikate, Magnesiumsilikate und Alkalisilikate, ferner Seesand und andere natürlich vorkommende Siliziumdioxide, Kieselsäuren, insbesondere disperse Kieselsäuren, Kieselgele, weiterhin Tonmineralien, Glimmer, Carbonate wie Calciumcarbonat, Phosphorit und Phosphate wie Calciumphosphat und Ammoniummagnesiumphosphat, Sulfate wie Calciumsulfat und Bariumsulfat, außerdem Oxide wie Zirkondioxid, Nickeloxid, Palladiumoxid, Bariumoxid, disperse Antimonoxide und Aluminiumoxide, wie Bauxit, Aluminiumoxidhydrat, darüber hinaus Flugaschen und Ruß-Sorten verschiedenster Art.

Als synthetische organische Produkte kommen vorzugsweise in Frage Aminoplastkondensate, insbesondere solche aus Harnstoff, Dicyandiamid, Melamin oder Oxamid und Aldehyden, wie Formaldehyd, acetaldehyd, Isobutyraldehyd, Hydroxypivalinaldehyd, Crotonaldehyd, Hydroxyacetaldehyd, Furfurol, Hydroxymethylfurfurol, Glyoxal und Glucose, wobei speziell genannt seien Kondensationsprodukte aus Harnstoff und Formaldehyd, Harnstoff und Glyoxal, Harnstoff und Acetaldehyd, Harnstoff und Isobutyraldehyd, Harnstoff und Crotonaldehyd, Harnstoff und Hydroxypivalinaldehyd sowie das 2-Oxo-4-methyl-6-ureido-hexahydropyrimidin, welches ein bekanntes Kondensationsprodukt aus 1 Mol Crotonaldehyd und 2 Mol Harnstoff ist, das aus intermediär anfallendem Crotonyliden-diharnstoff unter Absättigung der Doppelbindung entsteht und dem die Konstitution

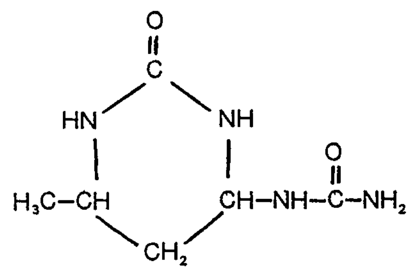

zukommt. Weiterhin kommen als synthetische organische Produkte vorzugsweise in Betracht Kunststoffe, wie Polyamidpulver, Polyurethanpulver und Polycarbodiimide, ferner polymere Chinone, Additions- bzw. Kondensationsprodukte aus Chinonen, insbesondere Benzochinon, mit Aminen oder Ammoniak, außerdem mit Aldehyden, insbesondere Formaldehyd, vernetzte Gelatine, synthetische Bodenverbesserungs mittel, wie z.B. das als Hygromull bekannte Produkt (= Harnstoff-Formaldehyd-Harzflocken), darüber hinaus synthetische Zucker, wie z.B. aus Formaldheyd hergestellte Formose-Zuckergemische, ferner schwerlösliche Rohrzucker-Komplexe, wie der Saccharose-Calciumoxid-Komplex der Zusammensetzung 1 Mol Saccharose . 3 Mol Calciumoxid, und schließlich organische Ammoniumsalze, wie Ammoniumcarbaminat, und andere organische Stickstoffverbindungen wie Hexamethylentetramin und Hexahydrotriazine.

Als synthetische anorganische Produkte, die vorzugsweise in Frage kommen, seien genannt Düngemittel, wie Superphosphat, Thomasschlacke, Rhenaniaphosphat, Phosphorit, Kalkstickstoff, Kalkammonsalpeter, Leunasalpeter, Kalium phosphate, Kaliumnitrat und Ammoniumnitrat, ferner Pigmente, wie Eisenoxide und Titandioxide, außerdem Metalloxide und Metallhydroxide, wie Calciumoxid, Calciumhydroxid, Bleihydroxid, Wismuthydroxid, Manganhydroxid und Magnesiumhydroxid, wobei in situ hergestellte, Hydroxide besonders bevorzugt sind, weiterhin synthetische Kieselsäuren, insbesondere in situ hergestellte Kieselsäure und deren Salze, außerdem Wasserglas, Salze wie Cobaltmolybdat, Ammoniumcarbonat und Calciumcarbonat, und darüber hinaus Katalysatoren, insbesondere Schwermetallkatalysatoren, der verschiedensten Art.

Als Mischprodukte aus anorganischen und organischen Produkten kommen vorzugsweise neutrale, basische oder saur Böden, natürliche Bodenverbesserungsmittel, biologisch aktive Gartenerde und Klärschlämme in Betracht.

Die Zusatzstoffe können in den erfindungsgemäßen Produkten in physikalischer und/oder chemischer Bindung in einer Menge von 1 bis 95 Gewichtsprozent, vorzugsweise von 5 bis 90 Gewichtspozent enthalten sein. In manchen Fällen können Produkte vorliegen, in denen die erfindungsgemäßen modifizierten Azulminsäuren von den Zusatzstoffen umhüllt sind. Als Beispiel für derartige Produkte seien mit Polycarbodiimiden umhüllte, z.B. mikroverkapselte erfindungsgemäße modifizierte Azulminsäuren genannt.

Detaillierte Beschreibung der erfindungsgemäßen Verfahren

Bei der Herstellung der erfindungsgemäßen Produkte nach dem erfindungsgemäßen Verfahren (1), Varianten (a) bis (g) dienen nahezu fehlerstellenfreie, in Gegenwart von Wasser hergestellte Blausäurepolymerisate, sogenannte Azulminsäuren, als Ausgangsstoffe. Derartige nahezu fehlerstellenfreie Azulminsäuren sind bereits bekannt (vergleiche Houben-Weyl, Band 8 (1952), Seite 261; DT—PS 662 338 und DT—PS 949 060).

Nach der Variante (a) des erfindungsgemäßen Verfahrens (1) werden die nahezu fehlerstellenfreien Azulminsäuren gegebenenfalls in Anwesenheit von Zusatzstoffen mit katalytischen Mengen an anorganischen oder organischen Säuren behandelt. Hierbei kommen als anorganische oder organische Säuren vorzugsweise alle diejenigen Säuren in Frage, die bereits im Zusammenhang mit der Beschreibung der erfindungsgemäßen Azulminsäure-Säureadditionsprodukte vorzugsweise aufgezählt wurden. Als Zusatzstoffe können alle diejenigen Materialien verwendet werden, die bereits im Zusammenhang mit der Beschreibung der erfindungsgemäßen Produkte als Zusatzstoffe genannt wurden.

Bei der Durchfürung der Variante (a) des erfindungsgemäßen Verfahrens (1) arbeitet man ebenso wie bei den im folgenden beschriebenen Varianten (b), (d) und (f) in wäßrigem Medium, vorzugsweise in Wasser. Es ist jedoch auch möglich, das Wasser jeweils partiell durch andere Verdünnungsmittel, wie Schwefelwasserstoff oder Alkohole zu ersetzen, wobei Methanol und Äthanol speziell genannt seien.

Die Umsetzung nach Variante (a) des erfindungsgemäßen Verfahrens (1) wird ebenso wie die im folgenden beschriebene Varianten (b) bis (g) im allgemeinen unter Normaldruck ausgeführt. Es ist jedoch auch jeweils möglich, unter erhöhtem Druck zu arbeiten.

Bei der Durchführung der Variante (a) des erfindungsgemäßen Verfahrens (1) setzt man auf 1 Mol (bezogen auf die Moleküleinheit

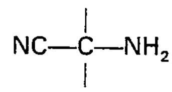

mit dem Äquivalentgewicht 54) nahezu fehlerstellenfreier, in Gegenwart von Wasser hergestellter Azulminsäure eine katalytische Menge einer anorganischen oder organischen Säure sowie gegebenenfalls eine solche Menge an Zusatzstoffen ein, daß deren Anteil im Endprodukt zwischen 1 und 95 Gewichtsprozent, vorzugsweise zwischen 5 und 90 Gewichtsprozent liegt. Die Aufarbeitung erfolgt nach üblichen Methoden. Im allgemeinen verfährt man in der Weise, daß man das Reaktionsgemisch nach beendeter Umsetzung filtriert und das erhaltene *Festprodukt* gegebenenfalls wächt und trocknet.

Verwendet man bei der Durchführung der Variante (a) des erfindungsgemäßen Verfahrens (1) Salpetersäure zur Fehlerstellenerzeugung und hält dabei die Reaktions-temperatur relativ niedrig, vorzugsweise zwischen 20 und 30°C, so werden Spuren abgespaltener Blausäure oxidiert, während gleichzeitig außerordentlich leicht Additionen von Salpetersäure an die Aminogruppen der modifizierten Azulminsäuren stattfinden und man in einfacher *topochemischer Reaktion* modifizierte Azulminsäurentypen erhält, die an ihren Aminogruppen ionische Gruppen der Konstitution

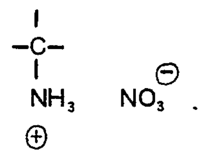

enthalten.

Auf diese Weise werden pro 100 Gewichtsteile an modifizierter Azulminsäure etwa 0,5 Mol an Salpetersäure gebuden. Je nach Verfahrensart und Einwirkungsdauer der verdünnten Salpetersäure auf die modifizierten Azulminsäuren sind etwa 30 bis 50% der vorhandenen Aminogruppen der Salzbildung zugänglich. Spuren freier Salpetersäure können vorteilhaft durch Begasung der Produkte mit gasförmigem Ammoniak in Ammoniumnitrat umgewandelt werden, wobei die Reaktion vorteilhafterweise in fester Phase im Wirbelbett ausgeführt wird.

Verwendet man bei der Durchführung der Variante (a) des erfindungsgemäßen Verfahrens (1) Phosphorsäure oder phosphorige Säure zur Fehlerstellenerzeugung und hält dabei die Reaktionstemperaturen relativ niedrig, vorzugsweise zwischen 20°C und 55°C, so werden Decarboxylierungsreaktionen und die damit verbundene Erzeugung von $F_2$-Fehlerstellen weitgehend zurückgedrängt. Die Säuren werden gleichzeitig in heterogener Reaktion außerordentlich leicht von den Aminogruppen der modifizierten Azulminsäuren gebunden. Auf diese Weise werden von 100 Gewichtsteilen modifizierter Azulminsäure innerhalb von fünf Minuten bereits etwa 0,2 Mol Phosphorsäure bzw. etwa 0,5 Mol phosphorige Säure gebunden. Die entstehenden Salze sind nahezu wasserunlöslich. In den Produkten enthaltene kleine Mengen an freier Phosphorsäure bzw. phosphorige Säure können vorteilhaft durch Behandlung der Produkte mit gasförmigem Ammoniak zu den entsprechenden Ammoniumsalzen umgesetzt werden, wobei die Reaktion vorteilhafterweise in fester Phase im Wirbelbett ausgeführt wird.

In einer besonderen Ausführungsform der Variante (a) des erfindungsgemäßen Verfahrens (1) setzt man die Azulminsäure in Gegenwart von hydrolytisch abbaubaren Naturstoffen, wie z.B. Cellulosen, Hemicellulosen, Zukkern, Lignin, polymeren Chinonen, Holzpulver, pflanzlichem Material, Polypeptiden wie Gelatine une Wolle, ferner Hefeproteinen, Algenmassen und Torfpflanzen, mit 0,2 bis 80%iger Phosphorsäure bzw. phosphoriger Säure um. Hierbei erfolgt die Fehlerstellenerzeugung unter gleichzeitigem hydrolytischen Abbau der jeweiligen eingesetzten Naturstoffe. Im Falle der Verwendung von Polypeptiden werden diese in Aminosäuregemische gespalten. Die Azulminsäure bindet infolge ihrer zahlreichen Aminogruppen etwa 0,3 bis 0,4 Mol an Phosphorsäure bzw. phosphoriger Säure, während die phosphorsauren Salze der Aminosäuren oder die der Oligopolypeptide, bzw. die anderen niedermolekularen Spaltprodukte der eingesetzten Naturstoffe, auch wenn sie wasserlöslich sind, oft in großer Menge von der Azulminsäure-Matrix fixiert werden. Überschüssige Säure, z.B. Phosphorsäure, kann durch Zugabe von Calciumhydroxid als Calciumphosphat auf der Azulminsäure-Matrix gefällt werden. Sind hierbei hydrolysierte Zucker und Oligosaccharide vorhanden, so werden diese in Form

ihrer meist schwer löslichen Calcium-Komplexe auf der Azulminsäure aufgezogen. Die nach dieser Variante des erfindungsgemäßen Verfahrens (1) erhaltenen Verfahrensprodukte können über längere Zeit gelagert werden, ohne daß eine unangenehme Geruchsbildung eintritt, wie es ansonsten der Fall ist, wenn Naturstoffe wie Oligopeptide, Peptid-Zuckergemisch usw. durch biologische Prozesse abgebaut werden.

Eine weitere besondere Ausführungsform der Variante (a) des erfindungsgemäßen Verfahrens (1) besteht darin, daß man zur Erzeugung der Fehlerstellen 1 bis 4 Mol an 1 molarer Phosphorsäure-Lösung einsetzt und die überschüssige Phosphorsäure anschließend durch Zugabe von Calciumchlorid als Calciumphosphat, durch Zugabe von Magnesiumchlorid als Magnesiumphosphat oder durch Zugabe von Ammoniak und Magnesiumsalzen als Ammonium-magnesium-phosphat fällt. Hierbei können gleichzeitig Zusatzstoffe der verschiedensten Art mitverwendet werden. Besonders bevorzugte Zusatzstoffe sind in diesem Fall pflanzlich Aschen, unlösliche Polychinone, Additions- bzw. Kondensationsprodukte des Benzochinons mit Aminen, insbesondere mit Ammoniak, ferner Lignin, Ligninsulfonsäure, Huminsäuren, diverse Flugaschen, Bauxit, Aluminiumoxid, Cobaltmolybdat, Sicliciumdioxid, Aktivkohle, Zirkondioxid, Nickeloxid, Palladiumxodid und Bariumoxid. Weiterhin kommen als bevorzugte Zusatzstoffe auch Zucker, wie Rohrzucker und andere keine freien Aldehydgruppen aufweisenden Zucker, oder auch aus Formaldehyd hergestellte Formose-Zuckergemische in Frage. Diese verschiedensten Zuckerarten können in Kanäle und Poren der starren Azulminsäureköper fixiert werden. Darüber hinaus können die verschiedenen Zucker auch in Form ihrer meist schwer löslichen Calcium-Komplexe auf den Azulminsäuren aufziehen.

Nach der Variante (b) des erfindungsgemäßen Verfahrens (1) werden die nahezu fehlerstellenfreien, in Gegenwart von Wasser hergestellten Azulminsäuren gegebenenfalls in Anwesenheit von Zusatzstoffen mit katalytischen Mengen an Basen oder mit basischen Salzen behandelt. Hierbei kommen als Basen sowohl organische als auch anorganische Basen in Frage. Vorzugsweise verwendbare organische Basen sind Ammoniak, Alkylamine mit 1 bis 6 Kohlenstoffatomen, Dialkylamine mit 1 bis 6 Kohlenstoffatomen pro Alkylgruppe, Trialkylamine mit 1 bis 6 Kohlenstoffatomen pro Alkylgrupe, Hydroxyalkylamine mit 1 bis 6 Kohlenstoffatomen, Di-(hydroxyalkyl)-amine mit 1 bis 6 Kohlenstoffatomen pro Hydroxyalkylgruppe, Tri-(hydroxyalkyl)-amine mit 1 bis 6 Kohlenstoffatomen pro Hydroxyalkylgruppe, Alkyl-hydroxyalkyl-amine mit 1 bis 6 Kohlenstoffatomen in der Alkyl- bzw. in der Hydroxyalkyl-gruppe. Cycloalkylamine mit 3 bis 8 Kohlenstoffatomen, Alkylendiamine mit 2 bis 6 Kohlenstoffatomen, Guanidin, Melamin, Dicyandiamid, gesättigte oder ungesättigte heterocyclische Stickstoffbasen mit 5 bis 7 Ringgliedern und 1 bis 3 Stickstoffatomen im heterocyclischen Ring, sowie diejenigen Basen, die sich von den durch Quaternisierung, z.B. Permethylierung, der vorgenannten Stickstoffverbindungen entstehenden Verbindungen ableiten, und weiterhin diejenigen Basen, die sich von Trialkylsulfonium-Verbindungen ableiten. Besonders bevorzugte Stickstoffbasen sind in diesem Zusammenhang Ammoniak, Methylamin, Methyläthanolamin, Dimethylamin, Trimethylamin, Äthylamin, Diäthylamin, Triäthylamin, tert.-Butylamin, Äthanolamin, Diäthanolamin, Triäthanolamin, Cyclopropylamin, Cyclopentylamin, Cyclohexylamin, Äthylendiamin, Pyrrolidin, Piperidin, Morpholin, Imidazol, Pyrazol, 1,2,4-Triazol, 1,2,3-Triazol, 2-Äthyl-imidazol, Aminotriazol und Triäthylsulfoniumhydroxid.

Vorzugsweise verwendbare anorganische Basen sind Alkali- und Erdalkalimetall-hydroxide, Speziell genannt seien Lithiumhydroxid, Natriumhydroxid, Kaliumhydroxid, Magnesiumhydroxid, Calciumhydroxid, Strontiumhydroxid und Bariumhydroxid.

Als basische Salze kommen bei der Durchführung der Variante (b) des erfindungsgemäßen Verfahrens (1) vorzugsweise Alkalisulfide, wie Natriumsulfid, Natriumhydrogensulfid und Kaliumhydrogensulfid, ferner Natriumthiosulfat, Ammoniumthiosulfat, Ammoniumpolysulfide, Calciumhydrogensulfid, Calciumthiosulfat und Calciumcyanamid, weiterhin Kaliumcarbonat, Kaliumhydrogencarbonat, Kaliumcyanat und Wasserglas (Natrium- oder Kaliumwasserglas) zum Einsatz. -Besonders geeignet zur Fehlerstellenerzeugung nach dieser Methode sind auch Gemische von Ammoniak und Natriumthiosulfat, Ammoniumthiosulfat, Natriumhydrogensulfid, Natriumsulfid und/oder Ammoniumpolysulfiden.

Als Zusatzstoffe können bei der Durchführung der Variante (b) des erfindungsgemäßen Verfahrens (1) alle diejenigen Materialien verwendet werden, die bereits im Zusammenhang mit der Beschreibung der erfindungsgemäßen Stoffe als Zusatzstoffe genannt wurden.

Bei der Durchführung der Variante (b) des erfindungsgemäßen Verfahrens (1) kann das Wasser des Reaktionsmediums partiell durch Schwefelwasserstoff ersetzt werden. — Arbeitet man in Anwesenheit von Schwefelwasserstoff oder in Anwesenheit von Reagenzien, die unter den Reaktionsbedingungen Schwefelwasserstoff abgeben, und hält die Reaktionstemperatur zwischen 70°C und 100°C, so werden geringe Mengen an abgespaltener Blausäure bei gleichzeitiger Fehlerstellenerzeugung in Kohlenoxysulfid und Ammoniak überführt.

Wird bei der Variante (b) des erfindungsgemäßen Verfahrens (1) gasförmiges Ammoniak zur Fehlerstellenerzeugung verwendet, so empfiehlt es sich, unter erhöhtem Druck zu arbeiten.

Bei der Durchführung der Variante (b) des erfindungsgemäßen Verfahrens (1) setzt man auf 1 Mol (bezogen auf die Moleküleinheit

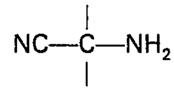

mit dem Äquivalentgewicht 54) nahezu fehlerstellenfreier, in Gegenwart von Wasser hergestellter Azulminsäure eine katalytische Menge an Base bzw. basischem Salz sowie gegebenenfalls eine solche Menge an Zusatzstoffen ein, daß deren Anteil im Endprodukt zwischen 1 und 95 Gewichtsprozent, vorzugsweise zwischen 5 und 90 Gewichtsprozent liegt. Die Aufarbeitung erfolgt nach üblichen Methoden. Im allgemeinen verfährt man in der Weise, daß man das Reaktionsgemisch nach beendeter Umsetzung filtriert und das *erhaltene Festprodukt* gegebenenfalls wäscht und trocknet. Vorteilhafterweise kann auch die im Endprodukt noch enthaltene Base durch Zugabe einer entsprechenden Menge an Säure, wie z.B. Phosphorsäure, neutralisiert werden so daß die entstehenden Produkte dann auch die jeweiligen Salze enthalten.

Verwendet man bei dieser Neutralisation einen Überschuß an Säure, so entstehen Säureadditions-Salze der jeweiligen modifizierten Azulminsäuren.

In einer besonderen Ausführungsform der Variante (b) des erfindungsgemäßen Verfahrens (1) setzt man die Azulminsäure in wäßrig-alkoholischem Medium bei Temperaturen zwischen 120°C und 140°C mit gasförmigem Ammoniak unter Druck um. Hierbei entstehen modifizierte Azulminsäuren, die einen hohen Gehalt an Ammoniumcarboxylat-gruppen besitzen. Die in diesen Produkten enthaltenen freien Aminogruppen sind in der Lage, zusätzlich noch Säuren, wie z.B. Phosphorsäure, zu binden, so daß die Endprodukte nebeneinander Ammoniumionen und Säurereste enthalten.

In einer weiteren besonderen Ausführungsform der Variante (b) des erfindungsgemäßen Verfahrens (1) setzt man die Azulminsäure in *topochemischer Reaktion* mit katalytischen Mengen Wasserglas um. Hierbei entstehen mit Kalium- bzw. Natriumionen beladene modifizierte Azulminsäuren, deren verseifbare Nitrilgruppen als latente Säuren wirken und Kieselsäuren ausfällen. Letztere ziehen in feiner Verteilung auf den Reaktions-produkten auf. Eventuell vorhandenes überschüssiges Natrium- bzw. Kaliumsilikat kann durch einfaches Begasen der jeweiligen Dispersionen mit Kohlendioxid gefällt werden, oder in besonders vorteilafter Weise durch Zugabe von Phosphorsäure oder Calciumchlorid in Mischung mit Kalium-bzw. Natriumphosphaten oder Calciumsilikaten ausgefällt werden.

Nach der Variante (c) des erfindungsgemäßen Verfahrens (1) werden die nahezu fehlerstellenfreien, in Gegenwart von Wasser hergestellten Azulminsäuren 4 bis 60 Stunden mit destilliertem Wasser im Neutralbereich, vorzugsweise bei pH-Werten zwischen 6 und 6,5 behandelt. Die isolierung der Reaktionsprodukte erfolgt auch bei dieser Variante des erfindungsgemäßen Verfahrens nach üblichen Methoden. Im allgemeinen verfährt man in der Weise, daß man das Reaktionsgemisch nach beendeter Umsetzung filtriert und das *erhaltene Festprodukt trocknet.*

Nach der Variante (d) des erfindungsgemäßen Verfahrens (1) werden die nahezu fehlerstellenfreien, in Gegenwart von Wasser hergestellten Azulminsäuren mit katalytischen oder auch mit größeren Mengen an pflanzlichen Aschen, katalytisch wirksomen Naturstoffen und/oder Düngemitteln behandelt.

Als pflanzliche Aschen kommen hierbei die Verbrennungsprodukte von verschiedensten durch Photosynthese gebildeten Stoffen in Betracht. Vorzugsweise genannt seien die Aschen von Tannen, Ginster, serbischer Fichten, Eichen, Stroh, Birken, Buchen, Weiden, Tabakblättern, Tabskstengeln, ferner von Getreide, wie Roggen oder Gerste, weiterhin von Pilzen, z.B. Steinpilzen, Äpfeln, Möhrenwurzeln, Kartoffelknollen und Weißkrautblättern. Besonders vorteilhaft ist die Verwendung von kaliumreichen Aschesorten. Unter Aschen sind hierbei auch Gemische von verschiedenen pflanzlichen Aschen zu verstehen.

Als katalytisch wirksame Naturstoffe kommen vorzugsweise biologisch aktive Gartenerde sowie basische oder saure Böden der verschiedensten Art in Frage.

Als Düngemittel können bei der Fehlerstellenerzeugung nach der Variante (d) des erfindungsgemäßen Verfahrens (1) alle handelsüblichen Düngemittel verwendet werden. Vorzugsweise genannt seien mit Pflanzennährstoffen beladene Torfsorten, Superphosphat, Thomasschlacke, Rhenaniaphosphat, Phosphorit, Kalkstickstoff, Kalkammonsalpeter, Leunasalpeter, Kaliumphosphate, Kaliumnitrat und Ammoniumnitrat.

Verwendet man die pflanzlichen Aschen, katalytisch wirksamen Naturstoffe und/oder Düngemittel in größerer Menge, so dienen diese Stoffe nicht nur zu Fehlerstellenerzeugung, sondern sie sind in den entstehenden Produkten gleichzeitig auch als Zusatzstoffe enthalten. Die Aufarbeitung erfolgt nach üblichen Methoden.

Nach der Variante (e) des erfindungsgemäßen Verfahrens (1) werden die nahezu fehlerstellenfreien, in Gegenwart von Wasser hergestellten Azulminsäuren gegebenenfalls in Anwesenheit von katalytischen Mengen an Oxidationsmitteln sowie gegebenenfalls in Gegenwart von katalytischen Mengen an organischen Säuren mit Metallverbindungen behandelt.

Als Metallverbindungen kommen hierbei vorzugsweise Salze von Metallen der II. bis V. Hauptgruppe bzw. der I. bis VIII. Nebengruppe in Betracht. Beispielhaft genannt seien Calciumchlorid, -acetat und -nitrat, Strontium-nitrat, Bariumchlorid und -acetat, Aluminiumacetat und -formiat, Thalliumsulfat und -nitrat, Siliziumtetrachlorid, Natrium-bzw. Kaliumsilikat, Zinn-II-chlorid, Blei-II-chlorid, -II-acetat

und -II-nitrat, Wismut-III-nitat, Kupfersulfat, -nitrat und -acetat, Silbernitrat, Tetrachlorogoldsäure, Zinkchlorid und -acetat, Cadmiumchlorid, Quecksilber-II-chlorid, Titan-tetrachlorid und -tetrabutylat, Zirkonsulfat, Chrom-III-chlorid, Mangan-II-sulfat und -acetat, Eisen-II-sulfat, -II-acetat und -III-chlorid, Cobaltchlorid, Nickelchlorid, Hexachloroplatinsäure und Palladium-II-chlorid. Weiterhin bevorzugt verwendbare Metallverbindungen sind die Säuren des Vanadins, Molybdäns und des Wolframs, sowie deren Heteropolysäuren.

Als Oxydationsmittel, die bei der Durchführung der Variante (e) des erfindungsgemäßen Verfahrens (1) anwesend sein können, kommen alle üblichen sauerstoffabgebenden Mittel in Frage. Vorzugsweise verwendbar sind Luft, Salpetersäure, unterchlorige Säure, Perchlorsäure, Calciumhypochlorit, Wasserstoffperoxid.

Als organische Säuren, die bei der Durchführung der Variante (e) des erfindungsgemäßen Verfahrens (1) anwesend sein können, kommen vorzugsweise gesättigte und ungesättitge gegebenenfalls substituierte Carbonsäuren in Betracht. Speziell genannt seien Ameisensäure, Essigsäure, Propionsäure, 2-Äthyl-capronsäure, Acrylsäure, Methacrylsäure, Ölsäure, Ricinolsäure, Chloressigsäure, Dichloressigsäure, Trichloressigsäure und Hydroxyessigsäure.

Bei der Durchführung der Variante (e) des erfindungsgemäßen Verfahrens (1) arbeitet man im allgemeinen in wäßrigem medium, vorzugsweise in Wasser. Es ist jedoch auch möglich, das Wasser partiell durch andere Verdünnungsmittel, wie Säuren oder organische Kohlenwasserstoffe zu ersetzen, wobei Ameisensäure und Xylol speziell genannt seien.

Bei der Durchführung der Variante (e) des erfindungsgemäßen Verfahrens (1) setzt man auf 1 Mol (bezogen auf die Moleküleinheit

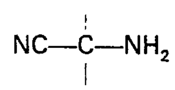

mit dem Äquivalentgewicht 54) Azulminsäure eine *katalytische Menge oder auch eine* größere Menge, — etwa 1 bis 2 Mol —, an Metallverbindung sowie gegebenenfalls eine katalytische oder auch größere Menge an Oxydationsmittel und gegebenenfalls eine katalytische oder auch größere Menge an organischer Säure ein. Die Aufarbeitung erfolgt nach üblichen Methoden. Im allgemeinen verfährt man in der Weise, daß man das Reaktionsgemisch nach beendeter Umsetzung filtriert und das dabei *erhaltene Festprodukt* gegebenenfalls wäscht und trocknet.

In den erfindungsgemäßen Produkten eventuell vorhandene überschüssige Metallverbindungen lassen sich je nach der Metallverbindung durch Zugabe von Basen, wie Ammoniak, Natriumhydroxid oder Kaliumhydroxid, oder durch Zugabe von Säuren, wie Phosphorsäure, in Form von fein verteilten oft schwer löslichen Niederschlägen fällen.

Nach der Variante (f) des erfindungsgemäßen Verfahrens (1) werden die nahezu fehlerstellenfreien, in Anwesenheit von Wasser hergestellten Azulminsäuren mit 0,5 bis 1 Mol Metallsalz-Komplexen stabilisierter Azulminsäuren pro Mol eingesetzter Azulminsäure behandelt.

Unter stabilisierten Azulminsäuren sind hierbei solche Produkte zu verstehen, die durch Umsetzung von fehlerstellenhaltigen Azulminsäuren mit Aldehyden, vorzugsweise Formaldehyd, bei Temperaturen zwischen 20°C und 150°C in wäßrigem Medium entstehen und die sowohl bei Raumtemperatur als auch bei erhöhter Temperatur gegenüber Cyanwasserstoffabspaltung sehr stabil sind. Läßt man auf derartige, mit Aldehyden stabilisierte Azulminsäuren, Metallsalze winwirken, so bilden sich die zur Durchführung der Variante (f) des erfindungsgemäßen Verfahrens (1) als Ausgangsstoffe benötigten Metallsalz-Komplexe stabilisierter Azulminsäuren. Vorzugsweise verwendbare Metallsalz-Komplexe sind solche, die sich von denjenigen metallverbindungen ableiten, die bereits im Zusammenhang mit der Variante (e) des erfindungsgemäßen Verfahrens (1) vorzugsweise genannt wurden.

Bei der Durchführung der Variante (f) des erfindungsgemäßen Verfahrens (1) setzt man auf 1 Mol (bezogen auf die Moleküleinheit

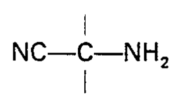

mit dem Äquivalentgewicht 54) nahezu fehlerstellenfreier Azulminsäure vorzugsweise 0,5 bis 1 Mol an metallsalz-Komplex stabilisierter Azulminsäure ein. Die Aufarbeitung erfolgt nach üblichen Methoden. Im allgemeinen verfährt man in der Weise, daß man das Reaktionsgemisch nach beendeter Umsetzung filtriert und das so *erhaltene Festprodukt* gegebenenfalls wäscht und trocknet.

In den nach der Variante (f) des erfindungsgemäßen Verfahrens (1) herstellbaren Produkten eventuell vorhandene überschüssige Metallverbindungen lassen sich je nach Metallverbindung durch Zugabe von Basen, wie Ammoniak, Natriumhydroxid oder Kaliumhydroxid, oder durch Zugabe von Säuren, wie Phosphorsäure, in Form von fein verteilten, oft schwer löslichen Niederschlägen fällen.

Nach der Variante (g) des erfindungsgemäßen Verfahrens (1) werden die nahezu fehlerstellenfreien, in Gegenwart von Wasser hergestellten Azulminsäuren mit katalytischen Mengen an Oxydationsmittel behandelt. Hierbei kommen als Oxydationsmittel alle überlichen oxidierend wirkenden Reagenzien in Frage. Vorzugsweise verwendbar sind Luft, Sauerstoff, Kaliumpermanganat, Wasserstoffperoxid, Chromsäure und Chlorkalk.

Bei der Durchführung der Variante (g) der erfindungsgemäßen Verfahrens (1) arbeitet man in Wäßrigem Medium, vorzugsweise in Wasser. Es ist jedoch auch möglich, das Wasser partiell durch andere Verdünnungsmittel wie organische Carbonsäuren zu ersetzen, wobei Ameisensäure und Essigsäure speziell genannt seien.

Die spezielle Durchführung und die Aufarbeitung erfolgen bei der Variante (g) des erfindungsgemäßen Verfahrens (1) nach üblichen Methoden.

Bei der Durchführung des erfindungsgemäßen Verfahrens (2) werden wäßrige Blausäure-Lösungen mit einem Blausäuregehalt von 15 bis 25% in Gegenwart von 1 bis 15%, vorzugsweise 2 bis 10%, — bezogen auf eingesetzte monomere Blausäure —, an basischen katalysatoren unter hydrolysierenden Bedingungen in wäßrigem Medium gegebenenfalls in Gegenwart von Zusatzstoffen zunächst 1 bis 4 Stunden bei Temperaturen zwischen 40 und 60°C und dann weitere 4 bis 10 Stunden bei Temperaturen zwischen 80 und 90°C polymerisiert, wodurch ein Umsatz von etwa 90 bis 95% erzielt wird. Anschließend kann man zur Vervollständigung der Umsetzung sowie zur Entfernung von noch vorhandener Blausäure und gegebenenfalls vorhandenen flüchtigen Aminen oder Ammoniak mehrere Stunden auf Temperaturen um etwa 100°C erhitzen.

Als basische Katalysatoren kommen bei dem erfindungsgemäßen Verfahren (2) organische und anorganische Basen sowie basische Salze der verschiedensten Art in Betracht. Vorzugsweise verwendbar sind Alkalicyanide und Alkalicyanate, wie Natriumcyanid, Kaliumcyanid, Natriumcyanat und Kaliumcyanat, ferner Amine und Ammoniak. Vorteilhafterweise können auch Gemische verschiedenster Basen bzw. basischer Salze eingesetzt werden; beispielsweise genannt sei ein Gemisch aus Natriumcyanat und wäßriger Ammoniak-Lösung.

Als Zusatzstoffe können bei der Durchführung des erfindungsgemäßen Verfahrens (2) alle diejenigen Materialien verwendet werden, die bereits im Zusammenhand mit der Beschreibung der erfindungsgemäßen Produkte als Zusatzstoffe genannt wurden.

Bei der Durchführung des erfindungsgemäßen Verfahrens (2) arbeitet man in wäßrigem Medium, vorzugsweise in Wasser. Es ist jedoch auch möglich, das Wasser partiell durch andere Verdünnungsmittel, wie Schwefelwasserstoff oder Alkohole zu ersetzen, wobei Methanol und Äthanol speziell genannt seien.

Die Umsetzung nach dem erfindungsgemäßen Verfahren (2) wird im allgemeinen unter Normaldruck ausgeführt. Es ist jedoch auch möglich, unter erhöhtem Druck bei Temperaturen zwischen 120°C und 150°C zu arbeiten. Hierbei lassen sich in gezielter Weise relativ große Mengen an Fehlerstellen in den Verfahrensprodukten erzeugen.

Die Zusatzstoffe werden dem Reaktionsgemisch gegebenenfalls in einer solchen Menge zugesetzt, daß deren Anteil im Endprodukt zwischen 1 und 95 Gewichtsprozent, vorzugsweise zwischen 5 und 90 Gewichtsprozent liegt. Die Aufarbeitung erfolgt nach üblichen Methoden. Im allgemeinen verfährt man in der Weise, daß man nach der Entfernung von überschüssiger Blausäure und gegebenenfalls vorhandener flüchtiger Amine bzw. Ammoniak das Reaktionsgemisch filtriert und das dabei erhaltene Festprodukt gegebenenfalls wäscht und trocknet.

Bei der Durchführung des erfindungsgemäßen Verfahrens (3) werden gemäß Verfahren (1) oder (2) hergestellte modifizierte Azulminsäuren in wäßrigem Medium bei Temperaturen zwischen 20 und 120°C mit katalytischen Mengen an anorganischen oder anorganischen Säuren behandelt.

Als anorganische oder organische Säuren kommen vorzugsweise alle diejenigen Säuren in Frage, die bereits in Zusammenhang mit der Beschreibung der erfindungsgemäßen Produkte vorzugsweise aufgezählt wurden.

Bei der Durchführung des erfindungsgemäßen Verfahrens (3) arbeitet man in wäßrigem Medium, vorzugsweise in Wasser. Es ist jedoch auch möglich, das Wasser partiell durch andere Verdünnungsmittel, wie Alkohole zu ersetzen, wobei methanol und Äthanol speziell genannt seien.

Die Umsetzung nach dem erfindungsgemäßen Verfahren (3) wird im allgemeinen unter Normaldruck ausgeführt. Es ist jedoch auch möglich, unter erhöhtem Druck zu arbeiten.

Die Aufarbeitung erfolgt nach üblichen Methoden. Im allgemeinen verfährt man in der Weise, daß man das Reaktionsgemisch nach beendeter Umsetzung filtriert und das erhaltene Festprodukt gegebenenfalls wäscht und trocknet. In den so entstehenden Produkten gegebenenfalls noch vorhandene überschüssige Säure kann durch Begasung mit Ammoniak in das entsprechende Ammoniumsalz überführt werden, wobei die Umsetzung vorteilhafterweise in fester Phase im Wirbelbett ausgeführt wird.

Sind in den nach den erfindungsgemäßen Verfahren (1) bis (3) hergestellten Produkten noch freie Aminogruppen vorhanden, so lassen sich diese Produkte durch behandlung mit anorganischen oder organischen Säuren in die entsprechenden Säure-Additions-Salze überführen. Hierbei verfährt man in der Weise, daß man die Produkte in wäßrigem Medium gegebenenfalls bei erhöhter Temperatur mit der jeweiligen Säure verrührt. Die Reaktionsprodukte werden durch Filtration isoliert.

Sind in den nach den erfindungsgemäßen Verfahren (1) bis (3) hergestellten Produkten noch freie Carboxylgruppen vorhanden, so lassen sich diese Produkte durch Behandlung mit Basen in die entsprechenden Salze überführen. Hierbei verfährt man in der Weise, daß man die Produkte in wäßrigem

Medium gegebenenfalls bei erhöhter Temperatur mit der jeweiligen Base verrührt. Die Reaktionsprodukte werden durch Filtration isoliert.

Verwendung erfindungsgemäßer Produkte

Die erfindungsgemäßen Produkte sind wie bereits erwähnt sehr vielseitig verwendbar. So eignen sie sich z.B. als Zwischenprodukte zur Herstellung von stabiliserten Azulminsäuren, worunter Azulminsäuren mit hoher Beständigkeit gegen Blausäurerückspaltung zu verstehen sind. Derartige stabilisierte Azulminsäuren lassen sich herstellen, indem man die erfindungsgemäßen modifizierten Azulminsäuren in wäßrigem Medium bei Temperaturen zwischen 20°C und 150°C, vorzugsweise zwischen 50°C und 120°C mit Carbonylverbindungen, vorzugsweise Aldehyden umsetzt, wobei Formaldehyd, Acetaldehyd, Crotonaldehyd, Isobutyraldehyd, Glyoxal, Acrolein, Hydroxyacetaldehyd, Hydroxypivalinaldehyd, Glycerinaldehyd, Furfurol, Chloral oder Chloralhydrat, Hydroxymethylfurfurol, Glucose, Methylglyoxal und Salicylaldehyd sowie als Formaldehyd abspaltendes Reagenz Hexamethylentetramin, Paraformaldehyd oder Trioxan speziell genannt seien. Die Isolierung der Reaktionsprodukte erfolgt durch Filtration. Stabilisierte Azulminsäuren dieser Art spalten selbst bei längerer Lagerung bei Raumtemperatur oder auch bei höheren Temperaturen keinen Cyanwasserstoff ab. Die betreffenden Stoffe lassen sich für die verschiedensten Zwecke einsetzen. Beispielsweise genannt sei ihre Verwendung als Füllstoffe in Polyurethanen oder anderen Kunststoffen, ferner ihre Verwendung als Katalysatoren oder Katalysatorträger, Flammschutzmittel und Argrarchemikalien.

Weiterhin können die erfindungsgemäßen Stoffe als reaktive Füllstoffe und als Katalysatoren in der Isocyanat-Chemie zur Herstellung von Polyurethankunststoffen eingesetzt werden. Besonders geeignet sind hierbei diejenigen erfindungsgemäßen Stoffe, die Metallsalze oder Metallionen enthälten.

Zahlreiche erfindungsgemäße Stoffe lassen sich als Flammschutzmittel bzw. Alterungsschutzmittel in den verschiedensten Polyurethankunststoffen, Polyamidkunststoffen, Vinylpolymerisaten, Kautschuken und Epoxidharzen verwendeten. Insbesondere eignen sich hierzu diejenigen erfindungsgemäßen Stoffe, die Phosphorsäure, phosphorige Säure, Polymethylenharnstoffe, Polymethylenmelamine, Calciumphosphate, Aluminiumphosphate, Aluminiumsilikate, Aluminiumoxidhydrat, Wasserglas, Melaminphosphat, Bariumphosphate, Ammoniummagnesiumphosphate und/oder Harnstoffoxalat enthalten.

Im übrigen können die erfindungsgemäßen Produkte entweder selbst als Agrarchemikalien eingesetzt werden oder als Zwischenprodukte zur herstellung von Agrarchemikalien dienen. Insbesondere eignen sich hierzu diejenigen Verbindungen, die zur Pflanzenernährung wichtige Salz enthalten.

Herstellungsbeispiele

I) *Herstellung bekannter Azulminsäuren*

Beispiel 1

Vergleichsversuch: Polymerisation monomerer Blausäure in Gegenwart von Kaliumcyanat (vgl. Angew. Chem. *72,* (1960) Seite 380, Beispiel 4).

200 Gewichtsteile einer 30%igen wäßrigen Blausäure-Lösung werden in Gegenwart von 1,08 Gewichtsteilen Kaliumcyanat 5 Stunden auf 40 bis 50°C erwärmt. Das gebildete Produkt wird abfiltriert, nacheinander mit destilliertem Wasser und Äthanol gewaschen und anschließend bei 80°C getrocknet. Man erhält Azulminsäure in Form eines schwarzen Pulvers in einer Ausbeute von 95% der Theorie.

Elementaranalyse:
41,4%C; 4,0% H; 43,2% N; 11,4% O

Aufgrund der angeführten Sauerstoffwerte kommt dieser Azulminsäure, deren Konstitution in etwa durch die auf Seite 2 dieser Anmeldung angegebenen Formel (I) charakterisiert wird, die Summenformel $C_{24}H_{28}O_5N_{22}$ zu (vgl. Angew. Chem. *72* (1960) Seite 383).

Dieses Polymerisat spaltet, auch nach sorgfältiger Langzeit-Trocknung bei Raumtemperatur oder bei 80°C, fortlaufend kleine Mengen an monomerer Blausäure ab. Nachträgliches intensives Waschen und erneutes Trocknen selbst im Hochvakuum bringt die Blausäurerückspaltung nicht zum Stillstand.

Die Cyanwasserstoff-Bestimmung erfolgt nach üblichen Methoden.

Lagert man 2000 g der Azulminsäure, die nach der oben angegebenen Methode hergestellt wurde, bei 50°C in einem Behälter mit einem Luftvolumen von 12 Litern, so wird nach 2 Stunden eine Cyanwasserstoff-Konzentration von 0,066 g Cyanwasserstoff pro 12 Liter Luft gemessen. Danach errechnet sich ein Cyanwasserstoff-MAK-Wert (MAK = maximale Arbeitsplatz-Konzentration) von 4583 ppm, also ein MAK-Wert, der 416-mal größer ist als der gesetzlich festgelegte MAK-Wert von 11 ppm. Demnach ist eine derartige Azulminsäure für eine praktische Anwendung völlig unbrauchbar.

Behandelt man 10 Gewichtsteile der nach dem obigen Verfahren hergestellten Azulminsäure 3

Stunden lang bei 100°C mit 100 Gewichtsteilen destilliertem Wasser und bestimmt dann im Filtrat die Cyanidionenkonzentration, so findet man eine Cyanidionenkonzentration, die einem Blausäure-Gehalt von 26 bis über 28 mg pro Liter Wasser entspricht. Derartige Cyanidionenkonzentrationen bewirken bereits Abtötungen und Desaktivierungen wichtiger im Boden vorkommender Bakterien und ihrer Enzymsysteme.

Beispiel 2

Vergleichsversuch: Polymerisation monomerer Blausäure nach dem "Zulaufverfahren" in Gegenwart von Ammoniak (vgl. DT—PS 949 060).

Ein Gemisch aus 5600 g Wasser, 1400 g Blausäure und 88 g Ammoniak wird genau nach den im Beispiel 1 der DT—PS 949 060 enthaltenen Angaben polymerisiert. Nach etwa fünfstündiger Polymerisationszeit bei 50°C steigt die Innentemperatur nach dem Abstellen der Kühlung auf 90°C, hält sich für etwa eine Stunde auf dieser Höhe und fällt dann ab. Die entstandene Azulminsäure wird isoliert, mit Wasser gewaschen und bei 80°C getrocknet, Ausbeute 98% der Theorie.

Thermische Stabilität:

Zweistündige Lagerung von 2000 g der Azulminsäure bei 50°C (vgl. Beispiel 1): MAK-Wert über 5000 ppm.

Hydrolytische Stabilität:

Dreistündige Behandlung von 10 Gewichtsteilen der Azulminsäure mit 100 Gewichtsteilen destilliertem Wasser bei 100°C (vgl. Beispiel 1): Blausäurekonzentration von 30 bis 36 mg pro Liter Wasser.

II Herstellung erfindungsgemäßer Azulminsäuren

Beispiel 3

108 g einer gemäß Beispiel 2 hergestellten Azulminsäure (von den Endgruppen abgesehen entspricht diese Menge im Mittel 2 Grundmol an polymerisierten Aminocyancarben-Einheiten der Struktur

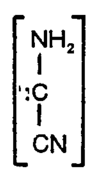

, Äquivalentgewicht = 54)

werden nach vorherigem Trocknen bei 80°C in einer verschlossenen Rührapparatur mit 1000 g destilliertem Wasser und 98 g (1 Mol) Phosphorsäure versetzt und auf 100°C erhitzt. Man hält das Reaktionsgemisch 16 Stunden bei dieser Temperatur und leitet während dieser Zeit, in der an der Azulminsäure eine heterogene Hydrolyse bzw. eine partielle Entcyclisierung stattfindet, einen als Treibgas dienenden Stickstoffstrom mit einer Geschwindigkeit von etwa 50 ml pro Minute durch das Reaktionsgemisch. Der austretende Stickstoffstrom wird durch zwei nacheinandergeschaltete Waschflaschen geleitet, wobei die erste zur Bindung des im Stickstoffstrom enthaltenen Ammoniaks mit 200 ml 1 n wäßriger Salzsäure gefüllt ist, und die zweite Waschflasche zur Bindung des im Stickstoffstrom vorhandenen Kohlendioxids mit 200 ml 1 n wäßriger Natronlauge beschickt ist. Im Abstand von 1 bis 3 Stunden werden die aus der Azulminsäure entbundenen Mengen an Ammoniak und Kohlendioxid titrimetrisch bestimmt. Nach 16-stündiger Reaktionsdauer beträgt die Gesamtmenge an Ammoniak, die durch hydrolytische Erzeugung von $F_1$-Fehlerstellen der Formel

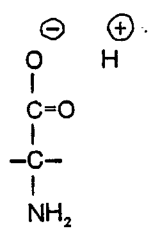

(Äquivalentgewicht 73)

entstanden ist 6,4 (≈ 0,38 Mol). Die Gesamtmenge an Kohlendioxid, die durch Decarboxylierung von $F_1$-Fehlerstellen zu $F_2$-Fehlerstellen der Formel

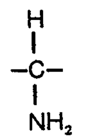 (Äquivalentgewicht 29)

entstanden ist, beträgt 4,3 g (≈ 0,1 Mol) (nach der Bariumcarbonat-Methode titrimetrisch ermittelt). Aus diesen Zahlen errechnet sich ein molarer $NH_3/CO_2$-Quotient von aufgerundet etwa 3,8. Dieser Zahlenwert besagt, daß von etwa 4 durch Entcyclisierung und Verseifung von Nitrilgruppen der Azulminsäure erzeugten Carboxylgruppen ($F_1$-Fehlerstellen) etwa eine decarboxyliert wird und damit zu einer $F_2$-Fehlerstelle führt.

Die Aufarbeitung geschieht in der Weise, daß man das feste Reaktionsprodukt abfiltriert, wäscht und trocknet. Man erhält 109 g einer $F_1$ und $F_2$-Fehlerstellen enthaltenden (modifizierten) Azulminsäure.

Aufgrund dieser Ausbeuteangabe und des ermittelten molaren $NH_3/CO_2$-Quotienten von 3,8 sowie aufgrund der Tatsache, daß die $F_2$-Fehlerstellen aus den $F_1$-Fehlerstellen entstanden sind (0,38 Mol – 0,1 Mol = 0,28 Mol), läßt sich errechnen, daß 100 Gewichtsteile des Verfahrensproduktes etwa 18,6 Gewichtsprozent an $F_1$-Fehlerstellen und etwa 2,67 Gewichtsprozent an $F_2$-Fehlerstellen enthalten. Die Summe an $F_1$- und $F_2$-Fehlerstellen beträgt 21,3 Gewichtsprozent.

Wie sich aus der Elementaranalyse ergibt, enthält die modifizierte Azulminsäure etwa 9,3 Gewichtsprozent an Phosphorsäure. Diese Phosphorsäure ist über die freien Amino-Gruppen (Ankergruppen) der modifizierten Azulminsäure an die polymere Matrix gebunden.

Beispiel 4

108 g (2 Grundmol) einer gemäß Beispiel 2 hergestellten Azulminsäure werden nach vorherigem Trocknen bei 80°C in einer verschlossenen Rührapparatur mit 1000 g destilliertem Wasser und 0,5 Mol Calciumsulfit-dihydrat versetzt und auf 100°C erhitzt. Man hält das Reaktionsgemisch 8 Stunden auf dieser Temperatur und leitet während dieser Zeit einen Stickstoffstrom mit einer Geschwindigkeit von etwa 50 ml pro Minute durch. In dem austretenden Stickstoffstrom wird der Gehalt an Ammoniak und Kohlendioxid in der im Beispiel 3 angegebenen Weise bestimmt. Es wird eine modifizierte Azulminsäure erhalten, deren molarer $NH_3/CO_2$-Quotient 2,68 ist.

Beispiel 5

108 g (2 Grundmol) einer gemäß Beispiel 2 hergestellten Azulminsäure werden nach vorherigem Trocknen bei 80°C in einer verschlossenen Rührapparatur mit 1000 g entionisiertem Wasser versetzt und auf 100°C erhitzt. Man hält das Reaktionsgemisch, in dem der pH-Wert 6,2 beträgt, 8 Stunden lang auf dieser Temperatur und leitet während dieser Zeit einen Stickstoffstrom mit einer Geschwindigkeit von 50 ml pro Minute durch. In dem austretenden Stickstoffstrom wird der Gehalt an Ammoniak und Kohlendioxid in der im Beispiel 3 angegebenen Weise bestimmt. Die Gesamtmenge an entbundenem Ammoniak beträgt 0,059 Mol.

Die Gesamtmenge an entbundenem Kohlendioxid beträgt 0,023 Mol.

Daraus ergibt sich ein molarer $NH_3/CO_2$-Quotient von 2,57.

Aus den entbundenen Mengen an Ammoniak und Kohlendioxid errechnet sich durch Differenzbildung (0,059 – 0,023 = 0,036), daß etwa 0,036 Äquivalente an $F_1$-Fehlerstellen und etwa 0,023, Äquivalente an $F_2$-Fehlerstellen entstanden sind.

Ausbeute an modifizierter Azulminsäure: 107 g

Aus dieser Ausbeuteangabe, dem molaren $NH_3/CO_2$-Quotienten und der Differenz der entbundenen Molmengen an Ammoniak und Kohlendioxid (0,059 – 0,023 = 0,036) errechnet sich, daß 100 Gewichtsteile des Verfahrensproduktes etwa 2,57 Gewichtsprozent an $F_1$-Fehlerstellen und etwa 0,7 Gewichtsprozent an $F_2$-Fehlerstellen enthalten.

Beispiel 6

Zu 7 Litern 20%iger wäßriger Blausäure (= 1400 g (52 Mol) Cyanwasserstoff) werden unter intensivem Rühren 350 g etwa 25-gewichtsprozentiger wäßriger Ammoniak-Lösung (= 87,5 g (etwa 5,15 Mol) Ammoniak) zugegeben, die 70 g (1,1 mol) Natriumcyanat enthält. Diese Mischung wird auf 40°C erwärmt. Danach steigt die Temperatur durch die freiwerdende Polymerisationswärme auf 70°C an. Man erhitzt noch 4 Stunden auf 90°C und arbeitet dann auf, indem man das braunschwarz anfallende Polymerisat, das in Wasser keine kolloiden Lösungen bildet, abfiltriert, nacheinander mit Wasser und Äthanol wäscht und anschließend bei 50—80°C unter vermindertem Druck trocknet.

Ausbeute: 94,9% der Theorie.

Elementaranalyse:
40,6% C; 4,1% H; 42,4% N; 12,8% O

In der Mutterlauge des Polymerisationsansatzes wird der Carbonat-Anteil in einer solchen Konzentration nachgewiesen, wie sie einer entbundenen Kohlendioxid-Menge von etwa 0,02 Mol pro 100 g Polymerisat entspricht. Demnach sind bei der Herstellung des Polymerisats bereits 0,56 Gewichtsprozent an $F_2$-Fehlerstellen in das Produkt eingeführt worden. Ferner ergibt sich unter Zugrundelegung eines molaren $NH_3/CO_2$-Quotienten von etwa 4, wie er in einem parallelversuch bei der zweistündigen Hydrolyse einer natriumcyanatfreien Azulminsäure bei 90°C gefunden wurde, daß pro 100 g des hergestellten Polymerisats eine Menge von 0,08 Mol Ammoniak entbunden wurde, was einem $F_1$-Fehlerstellengehalt von 4 Gewichtsprozent entspricht.

Somit handelt es sich bei dem nach dem obigen Verfahren hergestellten Polymerisat um eine $F_1$- und $F_2$-Fehlerstellen enthaltende Azulminsäure, also um eine modifizierte Azulminsäure.

Beispiel 7

4 Liter 20%ige wäßrige Blausäure, 200 ml etwa 25%ige wäßrige Ammoniak-Lösung und 40 g Natriumcyanat werden zusammengerührt. Dieses Reaktionsgemisch wird im Verlauf von 2 Stunden auf 90°C aufgeheizt. Danach rührt man unter Ausnutzung des Blausäure-Rückflusses bei Verwendung eines gut wirksamen Rückflußkühlers weitere 30 Minuten bei 90°C, destilliert dann 500 ml Wasser und eine geringe Menge an Blausäure ab und fügt erneut 500 ml Wasser hinzu. Anschließend wird 5 Stunden bei 100°C gerührt. Das dabei anfallende, ausgezeichnet filtrierbare schwarze Verfahrensprodukt wird abgesaugt, nacheinander mit etwa 4 Litern Wasser und mit Methanol gewaschen und unter vermindertem Druck getrocknet.

Ausbeute: 845 g an $F_1$- und $F_2$-Fehlerstellen enthaltender Azulminsäure.

Fehlerstellengehalt: etwa 11 Gewichtsprozent;

Elementaranalyse:
38,2% C; 4,9% H; 38,8% N; 18,9% O

Wie aus diesen Werten zu entnehmen ist, besitzt das Produkt einen höheren Sauerstoffgehalt und einen niedrigeren Stickstoffgehalt als die gemäß Beispiel 1 hergestellte Azulminsäure. Dies zeigt an, daß in dem erfindungsgemäßen Produkt ein großer Teil an Fehlerstellen ($F_1$ und $F_2$) enthalten ist.

Beispiel 8

Bei der Durchführung der zuvor beschriebenen Blausäurepolymerisation mit Hilfe von wäßriger Ammoniak-Lösung und Natriumcyanat als Katalysator unter den in Beispiel 1 angegebenen Bedingungen bei 40°C wird eine Azulminsäure erhalten, die praktisch frei von Fehlerstellen und daher relativ sauerstoffarm ist.

Elementaranalyse:
41,6% C; 3,9% H; 45,8% N; 7,5% O

Beispiel 9

Ein Gemisch aus 108 g der gemäß Beispiel 7 hergestellten modifizierten Azulminsäure (Fehlerstellengehalt etwa 11 Gewichtsprozent), 0,5 Mol Imidazol und 800 ml Wasser wird 20 Stunden auf 100°C erwärmt. Danach wird aufgearbeitet, indem man das Festprodukt abfiltriert, wäscht und trocknet. Man erhält eine modifizierte Azulminsäure, die aufgrund der ermittelten Ammoniak-Kohlendioxid-Abspaltungs-Bilanz etwa 30 Gewichtsprozent an $F_1$-Fehlerstellen aufweist.

Beispiel 10

Ein Gemisch aus 200 g der gemäß beispiel 6 hergestellten, relativ fehlerstellanarmen Azulminsäure (Zusammensetzung 40,6% C, 4,1% H; 42,4% N; 12,8% O) und 800 g einer 25%igen wäßrigen Ammoniak-Lösung wird 8 Stunden bei 25—31°C gerührt. Anschließend wird das schwarze Pulver abgesaugt, mit 5 Litern Wasser gewaschen und bei Raumtemperatur im Vakuum-Trockenschrank getrocknet.

Ausbeute: 215 g einer modifizierten Azulminsäure, die etwa 6—7 Gewichtsprozent an $F_1$-Fehlerstellen gebundenes Ammoniak enthält. Derartige abgewandelte $F_1$-Fehlerstellen lassen sich formelmäßig wie folgt veranschaulichen:

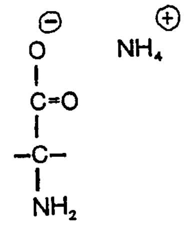

Elementaranalyse:
37,6% C; 4,8% H; 38,5% N; 19,4% O

Trocknet man das Verfahrensprodukt nicht bei Raumtemperatur, sondern bei höheren Temperaturen, so wird leicht Ammoniak abgespalten.

Beispiel 11

Ein Gemisch aus 200 g der gemäß Beispiel 6 hergestellten, relativ fehlerstellenarmen Azulminsäure und 800 g einer 25%igen wäßrigen Ammoniak-Lösung wird 3 Stunden in einer geschlossenen Apparatur bei 80°C gerührt. Anschließend wird das schwarze Pulver abgesaugt, mit 5 Litern Wasser gewaschen und bei Raumtemperatur im Vakuumtrockenschrank getrocknet. Man erhält eine modifizierte Azulminsäure, die etwa 13 Gewichtsprozent an $F_1$-Fehlerstellen gebundenes Ammoniak enthält.

Beispiel 12

Ein Gemisch aus 108 g der gemäß Beispiel 6 hergestellten Azulminsäure, 14 g Calciumthiosulfat-Hexahydrat und 800 ml Wasser wird 1,6 Stunden auf 100°C erwärmt. Danach wird aufgearbeitet, indem man das Festprodukt abfiltriert, wäscht und trocknet. Man erhält eine modifizierte Azulminsäure, die aufgrund der entbundenen Mengen an Ammoniak und Kohlendioxid etwa 3,3 Gewichtsprozent an zusätzlich entstandenen $F_1$-Fehlerstellen und etwa 1,4 Gewichtsprozent an zusätzlich entstandenen $F_2$-Fehlerstellen aufweist.

Beispiel 13

Ein Gemisch aus 108 g der gemäß Beispiel 6 hergestellten modifizierten Azulminsäure, 19 g Calcium-dihydrogensulfid-Hexahydrat und 800 ml Wasser wird 2 Stunden auf 100°C erwärmt. Danach wird aufgearbeitet, indem man das Festprodukt abfiltriert, wäscht und trocknet. man erhält eine modifizierte Azulminsäure, die etwa 2 Gewichtsprozent an Calcium und, — wie sich aus den entbundenen Mengen an Ammoniak und Kohlendioxid ergibt —, einen Gehalt von etwa 7 Gewichtsprozent an zusätzlich entstandenen $F_1$-Fehlerstellen und 0,9 Gewichtsprozent an zusätzlich entstandenen $F_2$-Fehlerstellen aufweist.

Beispiel 14

Zu 600 ml 18%iger wäßriger Blausäure und 100 g Polymethylenharnstoff werden unter intensivem Rühren 34 g etwa 25%iger wäßriger Ammoniak-Lösung gegeben, die 6,8 g Natriumcyanat enthält. Nach dem Erwärmen der Mischung auf 40°C steigt die Temperatur durch freiwerdende Polymerisationswärme auf 70°C an. Man erhitzt noch 4 Stunden auf 90°C und arbeitet dann auf, indem man das Polymerisat abfiltriert, nacheinander mit Wasser und Äthanol wäscht und anschließend unter vermindertem Druck trocknet.

Ausbeute: 201 g an modifizierter Azulminsäure, die Polymethylenharnstoff enthält.

Stickstoffgehalt des Verfahrensprodukte: 38,9%.

Nach der im Beispiel 14 beschriebenen Methode werden auch die in der nachstehenden Tabelle 1 aufgeführten Zusatzstoffe enthaltenden modifizierten Azulminsäuren hergestellt. Es wird jeweils 1 Liter 19,2%ige wäßrige Blausäure in Gegenwart von jeweils 180 g Zusatzstoff polymerisiert.

TABELLE 1

| Beispiel-Nr. | Zusatzstoff | Ausbeute [in g] | Stickstoffgehalt des Produktes |
|---|---|---|---|
| 15 | Aktivkohle | 342 | 22,9% |
| 16 | Bleicherde | 340 | 22,7% |
| 17 | Asbestmehl | 354 | 20,1% |
| 18 | Trilon-B | 170 | 41,8% |
| 19 | Stärke (unlöslich) | 342 | 22,4% |
| 20 | Flugasche "M" | 353 | ca 22 % |
| 21 | Torf (feucht) | 155 | 31,3% |

Beispiel 22

a) Ein Gemisch aus 108 g nahezu fehlerstellenfreier Azulminsäure, 100 g des Azulminsäure-Cadmiumchlorid-Komplexes und 1000 g destilliertem Wasser wird 8 Stunden bei 70°C gerührt. Anschließend wird das Festprodukt abfiltriert, gewaschen und getrocknet. Man erhält einen Azulminsäure-Cadmiumchlorid-Komplex mit einem relativ hohen $F_1$- und $F_2$-Fehlerstellengehalt. Der Gehalt an $F_1$-Fehlerstellen beträgt etwa 10—12 Gewichtsprozent.

b) Die Herstellung des als Ausgangsprodukt benötigten Azulminsäure-Cadmiumchlorid-Komplexes erfolgt in der nachstehend angegebenen Weise:

100 g von mit Formaldehyd stabilisierter Azulminsäure mit einem $F_1$-Fehlerstellengehalt von etwa 2,6 Gewichtsprozent und einem $F_2$-Fehlerstellengehalt von 0,6 Gewichtsprozent werden mit 0,5 Mol Cadmium-II-chlorid und 600 ml destilliertem Wasser 6 Stunden bei Raumtemperatur gerührt. Danach wird das Festprodukt abfiltriert, gut mit Wasser gewaschen und bei 100°C getrocknet. Man isoliert ein schwarzes feinpulvriges Produkt mit einem Cadmiumgehalt von 8,1 Gewichtsprozent. Es handelt sich bei dem Verfahrensprodukt um mit Formaldehyd stabilisierte Azulminsäure, die Cadmium-II-chlorid komplex gebunden enthält. — Das Azulminsäure-Komplexsalz ist gegenüber Cyanwasserstoffabspaltung völlig stabil.

c) Die Herstellung der als Ausgangsprodukt benötigten, mit Formaldehyd stabilisierten Azulminsäure erfolgt in der nachstehend angegebenen Weise:

108 g der gemäß Beispiel 6 hergestellten modifizierten Azulminsäure werden in 1000 g (= 10 Mol) 30%ige wäßrige Formalin-Lösung eingerührt und 8 Stunden bei 100°C gehalten. Danach wird aufgearbeitet, indem man das Reaktionsprodukt abfiltriert, mit Wasser wäscht und anschließend mit Methanol von Feuchtigkeit und Spuren an Formaldehyd befreit. Man erhält 150 g stabilisierte Azulminsäure, die selbst bei 180°C keinen Cyanwasserstoff abspaltet. — Im Falle einer bei 60°C gelagerten Probe wird ein Cyanwasserstoff-Abspaltungswert von 0 ppm gemessen.

In der im Beispiel 22 unter (a) angegebenen Weise werden die in der nachstehenden Tabelle 2 aufgeführten fehlerstellenhaltigen Azulminsäure-Komplexe erhalten, indem man relativ fehlerstellenfreie Azulminsäure mit dem entsprechenden Azulminsäure-Metallsalz-Komplex umsetzt.

TABELLE 2

| Beispiel-Nr. | Azulminsäure-Metallsalz-Komplex | Gehalt an $F_1$-Fehlerstellen [%] |
|---|---|---|
| 23 | Az-$MnSO_4$-Komplex | 9 |
| 24 | Az-Sn-$Cl_2$-Komplex | 12 |
| 25 | Az-$CuSO_4$-Komplex | 8 |
| 26 | Az-$HgCl_2$-Komplex | 7 |
| 27 | Az-$CoCl_2$-Komplex | 10,5 |
| 28 | Az-$ZnCl_2$-Komplex | 13 |
| 29 | Az-$FeSO_4$-Komplex | 8 |
| 30 | Az-$PbCl_2$-Komplex | 9 |
| 31 | Az-$Bi(NO_3)_3$-Komplex | 8 |
| 32 | Az-$AgNO_3$-Komplex | 7 |

"Az" steht jeweils für "Azulminsäure".

Die Herstellung derjenigen Azulminsäure-Komplex-Salze, die im Falle der Umsetzungen gemäß Beispielen 23 bis 32 als Ausgansstoffe benötigt werden, erfolgt nach der im beispiel 22 unter (b) angegebenen Weise, indem man jeweils 100 g mit Formaldehyd stabilisierter Azulminsäure mit jeweils 0,5 Mol eines Salzes des entsprechenden Metalles umsetzt. Die einzelnen Azulminsäure-Komplex-Salze sind in der nachstehenden Tabelle 3 aufgeführt.

TABELLE 3

| Beispiel-Nr. | Metallsalz | Metallgehalt des Azulminsäure-Komplexes |
|---|---|---|
| 23 b | $MnSO_4$ | 3,65 Gew.–% |
| 24 b | $SnCl_2$ | 23,5 Gew.–% |
| 25 b | $CuSO_4$ | 10,4 Gew.–% |
| 26 b | $HgCl_2$ | 28,4 Gew.–% |
| 27 b | $CoCl_2$ | 5,2 Gew.–% |
| 28 b | $ZnCl_2$ | 10,4 Gew.–% |
| 29 b | $FeSO_4$ | 6,8 Gew.–% |
| 30 b | $PbCl_2$ | 25,8 Gew.–% |
| 31 b | $Bi(NO_3)_3$ | 21 Gew.–% |
| 32 b | $AgNO_3$ | 26,7 GEW.–% |

Beispiel 33

Ein Gemisch aus 100 g nahezu fehlerstellenfreier Azulminsäure, 17 g Kupfernitrat-Trihydrat, 300 g Ameisensäure und 80 g Wasser wird unter Durchleiten von 25 Litern Luft pro Stunde 6 Stunden lang

bei 60—70°C gerührt. Danach wird das Festprodukt abfiltriert, gewaschen und getrocknet. Man erhält einen Azulminsäure-Kupfernitrat-Komplex mit einem Gehalt von etwa 8,9 Gewichtsprozent an $F_1$-Fehlerstellen und einem Gehalt von etwa 2,3-Gewichtsprozent an $F_2$-Fehlerstellen. Ferner isoliert man 0,8 Gewichsprozent an Oxamid, das aus abgespaltener monomerer Blausäure im Verlaufe der oxydativen Fehlerstellenerzeugung und gleichzeitiger Komplexierung entstanden ist.

Beispiel 34

Ein Gemisch aus 108 g gemäß Beispiel 6 hergestellter Azulminsäure, 1 Mol Eisen-II-sulfat und 800 ml destilliertem Wasser wird 10 Stunden lang bei 100°C gerührt. Danach wird das Festprodukt abfiltriert, mit 5%iger wäßriger Ammoniak-Lösung gewaschen und getrocknet. Man erhält eine relativ fehlerstellenreiche (bis zu 20 Gewichtsprozent) Azulminsäure der Zusammensetzung:

30,3% C; 3,6% H; 28,7% N; 26,8% O; 11,5% Fe

In analoger Weise werden die in der nachstehenden Tabelle 6 aufgeführten Verbindungen hergestellt.

TABELLE 4

| Beispiel-Nr. | verwendete Metallverbindung | Zusammensetzung des Produktes |
|---|---|---|
| 35 | $CuSO_4$ | 24,5 % C; 2,2 % H; 22,6 % N; 23,8 % O; 3,3 % S; 23,9 % Cu |
| 36 | $FeCl_3$ | 35,7 % C; 3,1 % H; 33,3 % N; 22,3 % O; 1,7 % Cl; 4,4 % Fe |
| 37 | $ZnCl_2$ | 23,5 % C; 2,2 % H; 21,6 % N; 19,1 % O; 34,1 % Zn |
| 38 | $CoCl_2$ | 28,4 % C; 2,7 % H; 27,8 % N; 20,4 % O; 20,2 % Co |
| 39 | $Cu(OCOCH_3)_2$ | 22,3 % C; 2,6 % H; 22,6 % N; 18,4 % O; 33,9 % Cu |
| 40 | $SnCl_2$ | 14,7 % C; 2,3 % H; 12,9 % N; 24,8 % N; 44,3 % Sn |
| 41 | $MnSO_4$ | 28,4 % C; 3,1 % H; 26.6 % N; 24,2 % O; 17,6 % Mn |
| 42 | $SnCl_2$(0,4 Mol) | 23,4 % C; 2,7 % H; 21,0 % N; 21,9 % O; 25,9 % Sn |
| 43 | $ZnCl_2$ (0,5 Mol) | 29,2 % C; 2,6 % H; 29,5 % N; 19,1 % O; 19,8 % Zn; |
| 44 | $PbCl_2$ | 58,3 % Pb |
| 45 | $Bi(NO_3)_3$ | 59,1 % Bi |
| 46 | $Tl_2SO_4$ | 57,9 % Tl |
| 47 | $TiCl_4$ (Xylol) | 25,2 % Ti |
| 48 | $Zr(SO_4)_2$ | 38,9 % Zr |
| 49 | $H_2WO_4$ | 55,8 % W |
| 50 | $NiCl_2$ | 29,2 % Ni |
| 51 | $AgNO_3$ | 43,1 % Ag |
| 52 | $HgCl_2$ | 58,3 % Hg |
| 53 | $HAuCl_4$ | 56 % Au |
| 54 | $H_2PtCl_6$ | 55,5 % Pt |

Beispiel 55

Ein Gemisch aus 100 g nahezu fehlerstellenfreier Azulminsäure, 100 g Gelatine, 100 g Cellulosepulver, 0,8 Mol Phosphorsäure und 1200 ml Wasser wird 2 Stunden lang bei 60°C gerührt. Danach wird das Festprodukt abfiltriert, gewaschen und getrocknet. Man isoliert ein relativ fehlerstellenreiches, phosphorsäurehaltiges Mischprodukt aus Azulminsäure sowie Cellulosepulver und Gelatine und deren Abbauprodukten.

**Patentansprüche**

1. Aus bekannten, in Gegenwart von Wasser hergestellten Azulminsäuren durch topochemische Reaktion erhältliche feste modifizierte Azulminsäuren mit intaktem Molekülgitter mit einem Gehalt von 0,5 bis 55 Gewichtsprozent an ionischen Gruppen der Formel

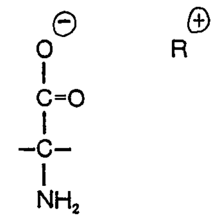

$(F_1)$

in welcher

R für Wasserstoff, Ammonium, ein Äquivalent einer protonisierten oder quaternisisierten organischen Stickstoffbase, eines Sulfonium-kations oder für ein Äquivalent eines Metallkations steht.

und mit einem Gehalt von 0,5 bis 15 Gewichtsprozent an durch Decarboxylierungsreaktionen entstandenen Gruppen der Formel

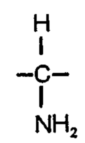

$(F_2)$

sowie Säureadditions-Salze und Komplex-Verbindungen dieser modifizierten Azulminsäuren und außerdem Mischprodukte dieser modifizierten Azulminsäuren mit Zusatzstoffen.

2. Verfahren zur Herstellung von Produkten gemäß Anspruch 1, dadurch gekennzeichnet, daß man nahezu fehlerstellenfreie bekannte, in wäßrigem Medium hergestellte Azulminsäure in topochemischer Reaktion in wäßrigem Medium

a) gegebenenfalls in Anwesenheit von Zusatzstoffen bei Temperaturen zwischen 20 und 120°C mit katalytischen Mengen an organischen oder anorganischen Säuren behandelt, oder

b) gegebenenfalls in Anwesenheit von Zusatzstoffen bei Temperaturen zwischen 20 und 150°C mit katalytischen Mengen an Basen oder basischen Salzen behandelt, oder

c) bei Temperaturen zwischen 80 und 120°C mit Wasser im Neutralbereich behandelt, oder

d) bei Temperaturen zwischen 80 und 120°C mit katalytischen oder auch mit größeren Mengen an pflanzlichen Aschen, katalytisch wirksamen Naturstoffen und/oder an Düngemitteln behandelt, oder

e) gegebenenfalls in Anwesenheit katalytischer Mengen von Oxidationsmitteln sowie gegebenenfalls in Anwesenheit von katalytischen Mengen an organischen Säuren bei Temperaturen zwischen 20 und 120°C mit katalytischen Mengen an Metallsalzen behandelt, oder

f) bei Temperaturen zwischen 20 und 120°C mit 0,5 bis 1 Mol an Metallsalz-Komplexen stabilisierter Azulminsäuren pro Mol an eingesetzter Azulminsäure behandelt, oder

g) bei Temperaturen zwischen 20 und 120°C mit katalytischen Mengen an Oxidationsmitteln behandelt,

und die hergestellten Produkte gegebenenfalls anschließend mit Säure oder Base behandelt.

3. Verfahren zur Herstellung von Produkten gemäß Anspruch 1, dadurch gekennzeichnet, daß man wäßrige Blausäure-Lösungen mit einem Blausäuregehalt von 15 bis 25% in Gegenwart von 1 bis 15%, — bezogen auf eingesetzte monomere Blausäure —, an basischen Katalysatoren unter hydrolysierenden Bedingungen in wäßrigem Medium gegebenenfalls in Gegenwart von Zusatzstoffen zunächst 1 bis 4 Stunden bei Temperaturen zwischen 40 und 60°C und dann weitere 4 bis 10 Stunden bei Temperaturen zwischen 80 und 90°C polymerisiert und die hergestellten Produkte gegebenenfalls anschließend mit Säure oder Base behandelt.

4. Verfahren zur Herstellung von Produkten gemäß Anspruch 1, dadurch gekennzeichnet, daß man gemäß Anspruch 2 oder 3 hergestellte modifizierte Azulminsäuren in wäßrigem Medium bei

Temperaturen zwischen 20 und 120°C mit katalytischen Mengen an organischen oder anorganischen Säuren behandelt und die so hergestellten Produkte gegebenenfalls anschließend mit Säure oder Base nachbehandelt.

5. Verwendung von Produkten gemäß Anspruch 1 als Zwischenprodukte zur Herstellung von stabilisierten Azulminsäuren.

6. Verwendung von Produkten gemäß Anspruch 1 als reaktive Füllstoffe und Katalysatoren in der Isocyanat-Chemie.

7. Verwendung von Produkten gemäß Anspruch 1 als Flammschutzmittel und/oder Füllmaterialien für Kunststoff.

8. Verwendung von Produkten gemäß Anspruch 1 als Ausgangsstoffe zur Herstellung von Agrarchemikalien.

**Claims**

1. Solid, modified azulmic acids with an intact molecular lattice, obtainable by a topochemical reaction from known azulmic acids prepared in the presence of water, and containing 0.5 to 55 per cent by weight of ionic groups of the formula

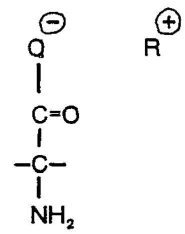

($F_1$)

in which

R represents hydrogen, ammonium, one equivalent of a protonated or quaternised organic nitrogen base or of a sulphonium cation or one equivalent of a metal cation,

and containing 0.5 to 15 per cent by weight of groups formed by decarboxylation reactions of the formula

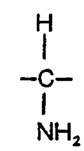

($F_2$)

and acid addition salts and complex compounds of these modified azulmic acids, and also mixed products of these modified azulmic acids with additives.

2. Process for the preparation of products according to Claim 1, characterised in that known azulmic acids which are almost free from structural defects and which have been prepared in an aqueous medium

a) are treated with catalytic amounts of organic or inorganic acids optionally in the presence of additives at temperatures between 20 and 120°C, or

b) are treated with catalytic amounts of bases or basic salts optionally in the presence of additives at temperatures between 20 and 150°C, or

c) are treated with water in the neutral range at temperatures between 80 and 120°C, or

d) are treated with catalytic, or even with larger amounts, of vegetable ashes, catalytically active naturally occurring substances and/or fertilisers, at temperatures between 80 and 120°C, or

e) are treated with catalytic amounts of metal salts, optionally in the presence of catalytic amounts of oxidising agents and optionally in the presence of catalytic amounts of organic acids, at temperatures between 20 and 120°C, or

f) are treated with 0.5 to 1 mol of metal salt complexes of stabilised azulmic acids per mol of azulmic acid employed, at temperatures between 20 and 120°C, or

g) are treated with catalytic amounts of oxidising agents at temperatures between 20 and 120°C,

in a topochemical reaction in an aqueous medium, and the prepared products are then optionally treated with an acid or base.

3. Process for the preparation of products according to Claim 1, characterised in that aqueous hydrocyanic acid solutions containing 15 to 25% of hydrocyanic acid are polymerised in the presence of 1 to 15% — based on the monomeric hydrocyanic acid employed — of basic catalysts, under hydrolysing conditions in an aqueous medium optionally in the presence of additives, first for 1 to 4

hours at temperatures between 40 and 60°C and then for a further 4 to 10 hours at temperatures between 80 and 90°C and the prepared products are then optionally treated with an acid or base.

4. Process for the preparation of products according to Claim 1, characterised in that modified azulmic acids prepared according to Claim 2 or 3 are treated with catalytic amounts of organic or inorganic acids in an aqueous medium at temperatures between 20 and 120°C and the products thus prepared are then optionally after-treated with an acid or base.

5. Use of products according to Claim 1 as intermediates for the production of stabilised azulmic acids.

6. use of products according to Claim 1 as reactive fillers and catalysts in isocyanate chemistry.

7. Use of products according to Claim 1 as flame-proofing agents and/or filler materials for plastics.

8. Use of products according to Claim 1 as starting compounds for the production of agrochemicals.

## Revendications

1. Acides azulmiques modifiés solides pouvant etre obtenus par réaction topochimique à partir d'acides azulmiques connus préparés en présence d'eau, à réseau moléculaire intact avec une teneur de 0,5 à 55% en poids en groupes ioniques de formule:

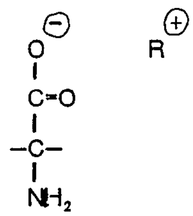

($F_1$)

dans laquelle:

R représente l'hydrogène, l'ion ammonium, un équivalent d'une base azotée organique protonée ou quanternisée d'un cation sulfonium, ou un équivalent d'un cation métallique,

et avec une teneur de 0,5 à 15% en poids en groupes formés par des réactions de décarboxylation, de formule:

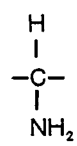

($F_2$)

ainsi que des sels d'addition d'acides et des composés complexes de ces acides azulmiques modifiés et en outre des produits mixtes de ces acides azulmiques modifiés avec des additifs.

2. Procédé pour l'obtention de produits suivant la revendication 1, caractérisé en ce qu'un acide azulmique connu pratiquement sans lacunes, préparé en milieu aqueux, est traité dans une réaction topochimique en milieu aqueux

a) éventuellement en présence d'additifs à des températures comprises entre 20 et 120°C, avec des quantités catalytiques d'acides organiques ou inorganiques, ou

b) éventuellement en présence d'additifs à des températures de 20 à 150°C, avec des quantités catalytiques de bases ou de sels basiques, ou

c) à des températures comprises entre 80 et 120°C, avec de l'eau dans l'intervalle neutre, ou

d) à des températures comprises entre 80 et 120°C, avec des quantités catalytiques ou aussi des quantités plus grandes de cendres végétales, de substances naturelles à action catalytique et/ou d'engrais, ou

e) éventuellement en présence de quantités catalytiques d'oxydants ainsi que, le cas échéant, en présence de quantités catalytiques d'acides organiques, à des températures comprises entre 20 et 120°C, avec des quantités catalytiques de sels de métaux, ou

f) à des températures comprises entre 20 et 120°C, avec 0,5 à 1 mole d'acides azulmiques stabilisés par des complexes de sels métalliques par mole d'acide azulmique utilisé, ou

g) à des temperatures comprises entre 20 et 120°C, avec des quantités catalytiques d'oxydants, et les produits obtenus sont traités ensuite, le cas échéant, avec un acide ou une base.

3. Procédé d'obtention de produits suivant la revendication 1, caractérisé en ce qu'on polymérise des solutions aqueuses d'acide cyanhydrique ayant une teneur en acide cyanhydrique de 15 à 25% en

poids en présence de 1 à 15% — par rapport à l'acide cyanhydrique monomère utilisé — de catalyseurs basiques dans des conditions hydrolysantes en milieu aqueux, éventuellement en présence d'additifs, tout d'abord pendant 1 à 4 heures à des températures comprises entre 40 et 60°C, puis pendant encore 4 à 10 heures à des températures comprises entre 80 et 90°C, et les produits formés sont ensuite traités éventuellement avec un acide ou une base.

4. Procédé pour l'obtention de produits suivant la revendication 1, caractérisé en ce qu'on traite des acides azulmiques modifiés, préparés suivant la revendication 2 ou 3, en milieu aqueux à des températures comprises entre 20 et 120°C avec des quantités catalytiques d'acides organiques ou inorganiques, et on traite ensuite éventuellement les produits ainsi obtenus avec un acide ou une base.

5. Utilisation de produits suivant la revendication 1 comme produits intermédiaires pour l'obtention d'acides azulmiques stabilisés.

6. Utilisation de produits suivant la revendication 1 comme charges réactives et catalyseurs dans la chimie des isocyanates.

7. Utilisation de produits suivant la revendication 1 comme retardateurs de flamme et/ou comme charges pour des matières plastiques.

8. Utilisation de produits suivant la revendication 1 comme substances de départ pour la production d'agents agrochimiques.